# EUROPÄISCHE PATENTSCHRIFT

(11) **EP 3 460 455 B1**
(45) Veröffentlichungstag und Bekanntmachung des Hinweises auf die Patenterteilung: **21.02.2024**
(21) Anmeldenummer: 18181754.5
(22) Anmeldetag: 04.07.2018
(51) Int. Cl.: G06V 10/141, G06V 10/147, G06V 40/13, F21V 8/00

(54) **VORRICHTUNG ZUR KONTAKTBASIERTEN GLEICHZEITIGEN AUFNAHME VON ABDRÜCKEN VON AUTOPODIEN**
DEVICE FOR SIMULTANEOUS CONTACT-BASED TAKING OF IMPRESSIONS OF AUTOPODIUM
DISPOSITIF DE SAISIE PAR CONTACT SIMULTANÉE DES IMPRESSIONS DES AUTOPODES

(30) Priorität: 31.08.2017 DE 102017119983
(43) Veröffentlichungstag der Anmeldung: 27.03.2019
(73) Patentinhaber: Dermalog Jenetric GmbH, 07749 Jena (DE)
(72) Erfinder: REINHOLD, Jörg, 07743 Jena (DE); MORGENEIER, Dirk, 07749 Jena (DE); KRENZER, Daniel, 99848 Wutha-Farnroda (DE); HILLMANN, Jürgen, 07745 Jena (DE); RIEHL, Philipp, 07745 Jena (DE); RICHTER, Undine, 07749 Jena (DE)
(74) Vertreter: Gleim Petri Patent- und Rechtsanwaltspartnerschaft mbB

(56) Entgegenhaltungen:
- EP-A2- 3 040 231
- EP-A2- 3 147 823
- CN-A- 108 021 845
- DE-A1- 3 634 493
- JP-A- 2003 281 920
- US-A1- 2001 017 774
- US-A1- 2003 020 028
- US-A1- 2009 185 722
- US-A1- 2012 019 877
- US-A1- 2012 176 682
- US-A1- 2012 206 817
- US-A1- 2013 082 980
- US-A1- 2013 120 760
- US-A1- 2014 098 306
- US-A1- 2014 205 160
- US-A1- 2016 254 312
- US-A1- 2017 212 293

## Beschreibung

### Gebiet der Erfindung

Die Erfindung betrifft eine Vorrichtung zur kontaktbasierten gleichzeitigen Aufnahme von Abdrücken mehrerer durchbluteter Hautbereiche menschlicher Autopodien mittels gestörter Totalreflexion. Eine solche Vorrichtung umfasst aus Richtung eines aufzulegenden Hautbereichs, beispielsweise aus Richtung einer Person, die einen Finger oder eine Hand auf einen Fingerabdrucksensor auflegt, einen Schutzkörper vorgegebener Dicke mit einer Auflagefläche zur Auflage mindestens eines Hautbereichs, wobei die Auflagefläche eine Größe aufweist, welche die gleichzeitige Auflage mehrerer Autopodien, in der Regel mehrerer Finger, ermöglicht. Die Vorrichtung umfasst außerdem eine Sensorschicht, die ihrerseits Teil eines Schichtsystems sein kann. Die Sensorschicht umfasst arrayförmig angeordnete, lichtempfindliche Sensorelemente zur Detektion von Licht mindestens eines vorgegebenen Wellenlängenbereichs. Zwischen den Sensorelementen, die auch als Pixel bezeichnet werden, sind Durchlassbereiche angeordnet, welche für Licht mindestens eines vorgegebenen Beleuchtungswellenlängenbereichs transparent sind. Schließlich umfasst die Vorrichtung auch einen Lichtleiter aus einem für Licht des vorgegebenen Beleuchtungswellenlängenbereichs transparenten Material. Der Lichtleiter ist in Form einer planparallelen Platte ausgebildet und weist eine untere Großseite und eine dazu parallel angeordnete obere Großseite auf, die obere Großseite ist der Sensorschicht zugewandt. Entsprechend der Form einer planparallelen Platte weist der Lichtleiter außerdem mehrere, die Großseiten miteinander verbindende Schmalseiten auf, der Lichtleiter selbst ist in der Regel als massiver Glas-oder Plastikkörper aufgebaut. Eine der Schmalseiten des Lichtleiters ist als Einkoppelfläche für Beleuchtungslicht ausgebildet. Eine Lichtquelle strahlt dazu entlang einer Längsrichtung der Einkoppelfläche Beleuchtungslicht ab, d.h. sie ist entlang dieser Längsrichtung ausgedehnt und strahlt das Licht zur Einkoppelfläche ab. Die Längsrichtung der Schmalseite bezeichnet dabei eine Richtung, die parallel zu den Ebenen der Großseiten liegt.

### Stand der Technik

Die Identifizierung und Erfassung von Personen über biometrische Merkmale gewinnt zunehmend an Bedeutung. Neben anderen biometrischen Merkmalen spielen dabei Fingerabdrücke eine wesentliche Rolle. Es gibt einerseits Systeme, die der Verifikation biometrischer Merkmale dienen, bei denen also eine Übereinstimmung mit abgespeicherten Merkmalen vorliegen muss, beispielsweise um eine Zugangs- oder Zugriffskontrolle zu ermöglichen. Andere Systeme dienen der Identifikation durch Suchen und Speichern in Vergleichsdatenbanken, beispielsweise bei Grenzkontrollen an Flughäfen oder bei der erkennungsdienstlichen Erfassung durch die Polizei.

Für die letztgenannten Systeme gibt es eine Vielzahl von Forderungen hinsichtlich der Qualität, der Auflösung und der Originaltreue der aufgenommenen Bilder der Hauttexturen. Nicht zuletzt aufgrund hoher Anforderungen durch mit erkennungsdienstlichen Maßnahmen betrauten Organisationen, wie beispielsweise das *Federal Bureau of Investigation* (FBI), gibt es bei diesen Systemen ein hohes Maß an Standardisierung, um einerseits eine möglichst zweifelfreie Erkennung zu sichern und andererseits Datensätze, die mit verschiedenen Systemen aufgenommen wurden, vergleichbar zu machen. Beispielsweise müssen solche Systeme eine Auflösung von mindestens 500 ppi (*points per inch*; Punkte pro Inch) haben, was einem Abstand der Sensorelemente von 50,8 µm entspricht. Außerdem werden bestimmte Anforderungen an die Kontrasttransferfunktion (*Contrast Transfer Function,* CTF), das Signal-Rausch-Verhältnis (*Signal Noise Ratio;* SNR) und an die Verzeichnung gestellt. Schließlich muss die Grauwertskala mindestens 200 Grauwerte umfassen und das Bildfeld muss sowohl in der näheren Pixelumgebung als auch im gesamten Bild möglichst homogen ausgeleuchtet sein.

Alle Anforderungskriterien benötigen ein ausgewogenes und qualitativ hochwertiges Systemdesign. Bei einem optischen System bedeutet das beispielsweise, dass nicht nur der Aufnahmesensor bzw. die Aufnahmesensoren den Anforderungen genügen müssen, sondern auch die Beleuchtung und alle anderen für die Bilderzeugung notwendigen Komponenten.

Für die Erfassung von Finger- und Handabdrücken, welche die genannten hohen Qualitätsanforderungen erfüllen, werden derzeit überwiegend optische Anordnungen verwendet, die nach dem Prinzip der gestörten Totalreflexion arbeiten. Dabei wird ein Prisma angesetzt, dessen für die Aufnahme des Abdrucks vorgesehene Fläche aufgrund mechanischer und optischer Anforderungen größer als die geforderte Fläche für die Aufnahme des Abdrucks sein muss. Die daraus resultierende Größe des Prismas als häufig größeres Bauteil im Aufnahmekanal beeinflusst die Mindestbaugröße und die Mindestmasse eines Gerätes entscheidend.

Die hohe Bildgüte erlaubt demgegenüber jedoch eine schnelle und sichere Erfassung und Identifizierung von Personen, insbesondere auch bei Anwendungen, wo neben forensischer Genauigkeit auch ein hoher Personendurchsatz eine Rolle spielt, beispielsweise bei Grenzkontrollen. Neben der Baugröße und der Masse ist außerdem nachteilig, dass die Verwendung komplexer mechanischer Bauteile notwendig ist, zudem sind Justierung und Montage zeitlich und technisch mit hohem Aufwand verbunden.

Um den Vorteil einer hohen Bildgüte, die mit gestörter Totalreflexion erreicht werden kann, mit geringer, insbesondere flacher Baugröße zu verbinden, werden beispielsweise in der US 9,245,167 B2 Ansätze beschrieben. Der dort offenbarte Fingerabdrucksensor, bei welchem der Finger auf ein TFT-Display (*Thin-Film-Transistor-Display*) gelegt wird, nimmt einen Fingerabdruck auf und überträgt diesen über eine Elektronik zu einem Computersystem. Das dem Fingerabdruck entsprechende Helligkeitsprofil entsteht dabei - wie bei Anordnungen mit Prismen - dadurch, dass die auf der Oberfläche des TFT-Displays aufliegenden Hautleisten, die sogenannten Papillarleisten, die interne Reflexion des Lichtes von der Lichtquelle stören, während in den Tälern zwischen den Papillarleisten, also den Hauttälern oder Papillartälern, kein Kontakt zwischen Haut und TFT-Display-Oberfläche auftritt und dort das Licht von der Lichtquelle an der Oberfläche des TFT-Displays intern reflektiert wird. Auf den lichtempfindlichen Bereichen des TFT-Displays entsteht auf diese Weise ein Negativbild des Fingerabdrucks. Diese Lösung setzt einerseits voraus, dass der Abstand zwischen den lichtempfindlichen Bereichen im TFT-Display und der Auflagefläche eine Mindestgröße hat, damit das Licht auf die lichtempfindlichen Bereiche des TFT treffen kann. Andererseits muss die Beleuchtung bestimmte Anforderungen bezüglich Einfallsrichtung und Öffnungswinkel erfüllen.

Die US 9,245,167 B2 offenbart verschiedene Möglichkeiten, wie eine Beleuchtung realisiert werden kann. Eine Möglichkeit besteht in einem unterhalb der Sensorschicht angeordneten Lichtleiter, in den von der Seite Licht eingekoppelt wird, welches von dort in die Sensorschicht eingekoppelt wird. Da die dort beschriebene Vorrichtung für die Untersuchung eines einzelnen Fingers ausgelegt ist, kann der Lichtleiter relativ kompakt gehalten werden, so dass sich ein Abfall der Beleuchtungsstärke mit zunehmender Entfernung von der Lichtquelle nicht störend bemerkbar macht. Bei größeren Auflagenflächen, die für die Auflage mehrerer Autopodien oder einer ganzen Hand vorgesehen sind, nimmt die Beleuchtungsstärke dann jedoch ab, so dass die am Rand befindlichen Autopodien nicht mehr korrekt beleuchtet werden, bzw. ihre Bilder aufgrund eines verringerten Kontrastes nicht mehr vollständig verwertbar sind. Um eine ausreichende Beleuchtungsstärke auch für den am weitesten entfernt von der Lichtquelle aufgelegten Finger zu erhalten, wird eine starke Lichtquelle benötigt, die jedoch dazu führt, dass die Finger, die der Lichtquelle am nächsten sind, mit zu hoher Intensität beleuchtet werden, was sich ebenfalls negativ auf den Kontrast auswirkt bzw. zu einer Überbelichtung dieser Bereiche führt. Eine für diese Autopodien optimale Beleuchtung führt hingegen dazu, dass die Autopodien, die von der Lichtquelle am weitesten entfernt aufgelegt werden, unterbelichtet und somit ebenfalls nicht darstellbar sind. In der US 9,245,167 B2 wird diese Art der Beleuchtung jedoch nicht mit gestörter Totalreflexion (TIR) verwendet, für solche Fälle wird die Verwendung eines zwischen Lichtleiter und Sensorschicht angeordneten Mikroprismen-Array vorgeschlagen, wenn die Lichtquelle unterhalb der Sensorschicht angeordnet ist.

In anderen Anordnungen wird das Licht auch direkt in eine oberhalb der Sensorschicht und oberhalb eines Deckglases angeordnete Prismenstruktur eingekoppelt. Eine andere, in der US 9,245,167 B2 beschriebene Ausführung verwendet Lichtquellen, die zwischen den lichtempfindlichen Sensorelementen angeordnet sind, hier wird jedoch keine Totalreflexion zur Bildaufnahme verwendet. Diese Ausführung kann auch im Zusammenhang mit dem Scannen eines Dokuments verwendet werden.

Bei der Verwendung eines Mikroprismen-Arrays können aufgrund von Reflexionen im Lichtleiter selbst Doppelbilder entstehen, zudem kann parasitäres Streulicht aus der Umgebung die Bildqualität beeinträchtigen. Bei den in der US 9,245,167 B2 beschriebenen Verfahren muss die Schutzschicht auf der Sensorschicht so dünn wie möglich gehalten werden, da ansonsten diffuses Licht optisches Übersprechen erzeugt, das die Auflösung verringert. Darunter versteht man den Fall, dass Licht aus verschiedenen Einfallswinkeln auf denselben Bereich der Auflagefläche trifft und dabei die gleiche oder sehr ähnliche Informationen über den aufliegenden oder nicht aufliegenden Finger an dieser speziellen Stelle registrieren, jedoch aufgrund der unterschiedlichen Einfallswinkel auch in unterschiedlichen Ausfallswinkeln abstrahlen und somit an verschiedenen Stellen detektiert werden, so dass die Auflösung verschlechtert wird.

Im Stand der Technik sind weitere Fingerabdruckscanner bekannt, die nach dem Prinzip der gestörten Totalreflexion mit Prismen, Objektiven und Sensoren arbeiten, beispielsweise aus der US 6,647,133 B1, aus der WO 2011/059496 A1, oder aus der WO 2007/115589 A1. In der WO 2008/033265 A2 wird ein optischer Fingerabdruckscanner mit berührungsempfindlicher Oberfläche und einer Beleuchtung über einen Lichtleiter beschrieben. Ebenfalls bekannt sind kapazitive TFT-Sensoren mit berührungsempfindlicher Steuerung, beispielsweise aus der WO 2001/36905 A1 oder aus der bereits genannten US 9,245,167 B2.

Wie bereits erwähnt, sind Prismengeräte deutlich größer und schwerer als Direktscanner, insbesondere wenn sie für die gleichzeitige Aufnahme mehrerer Finger dimensioniert sind. Die Justage muss sehr genau erfolgen, was technisch aufwendig ist. Ebenso ausgeschlossen ist eine Nutzerführung direkt im Aufnahmebereich der Hautabdrücke. Außerdem ist die Aufnahme von Dokumenten mit diesem Prinzip nicht möglich.

Direkte optische Fingerabdruckscanner funktionieren nur für einen geringen Abstand von Sensorelement und Hautoberfläche, nämlich bei Abständen von weniger als 25 µm. Eine widerstandsfähige Kapselung der Sensor- / Pixelstrukturen ist zwar mittels solch dünnem Deckglas realisierbar, die Robustheit gegenüber äußeren mechanischen Einfluss ist im Vergleich zu dickeren Deckgläsern jedoch reduziert. Verwendet man anstelle von Glas oder Keramik eine mindestens teiltransparente Beschichtung, so ist verglichen mit Glas die Stabilität gegenüber elektrostatischen Entladungen (ESD-Stabilität) verringert, eine solche Schutzschicht besitzt darüber hinaus nur eine geringere Härte und Abriebfestigkeit als Glas bzw. Keramik. Für die Abtastung von Dokumenten sind solche Vorrichtungen daher wenig geeignet. Glas mit Dicken von weniger als 30 µm ist zwar serientauglich kommerziell erhältlich, allerdings auf großen Auflageflächen aufwendig zu prozessieren, insbesondere ist ein blasenfreies optisches Bonden schwierig. Transparente Keramiken sind in dieser geringen Dicke nicht in Serie verfügbar. Grundsätzlich wäre die Verwendung einer dickeren Glasdeckschicht wünschenswert, dem steht jedoch die damit verbundene und eingangs beschriebene verringerte Auflösung gegenüber.

Kapazitive Geräte andererseits lassen sich nicht für die Aufnahmen von Dokumenten verwenden, die Sensoren sind darüber hinaus meist nicht transparent, so dass bisher weder eine Nutzerführung, noch ein Nutzerfeedback in der Aufnahmefläche durch ein darunter angebrachtes Display realisiert wurde.

### Beschreibung der Erfindung

Aufgabe der Erfindung ist es, eine Vorrichtung der eingangs beschriebenen Art zur Aufnahme von Fingerabdrücken dahingehend weiterzuentwickeln, dass zum einen die Abdrücke mehrerer Autopodien gleichzeitig aufgenommen werden können, zum anderen dickere Schutzkörper wie Deckgläser verwendet werden können, die optional auch das Scannen von Dokumenten erlauben. Die Auflagefläche soll flach sein, insbesondere muss die Vorrichtung in der Lage sein, für alle aufgelegten Autopodien gleichzeitig eine den durch Vorschriften vorgegebenen Qualitätsanforderungen entsprechende Bildqualität zu erzielen. Eine Nutzerführung direkt auf der Auflagefläche soll prinzipiell möglich sein.

Diese Aufgabe wird für eine Vorrichtung der eingangs beschriebenen Art dadurch gelöst, dass die Lichtquelle Licht in einem beschränkten Winkelbereich um eine Vorzugsrichtung abstrahlend ausgebildet ist, wobei die Vorzugsrichtung mit den Großseiten einen Einfallswinkel einschließt, welcher so vorgegeben ist, dass ein überwiegender Anteil des Lichts, welches in dem Winkelbereich abgestrahlt wird, nach Eintritt in den Lichtleiter an den Großseiten im Falle eines daran anliegenden Mediums mit einem Brechungsindex von Luft totalreflektiert würde. "Überwiegend" bedeutet dabei einen Anteil von mehr als 50%. Bevorzugt wird jedoch, um die Lichtmenge möglichst vollständig auszunutzen, die Konfiguration so gewählt, dass sämtliches Licht, welches in dem Winkelbereich um den Vorzugswinkel abgestrahlt wird, unter der genannten Bedingung totalreflektiert würde.

Zwischen der Sensorschicht und dem Lichtleiter ist außerdem eine Spiegelschicht angeordnet, welche einen Teil des Beleuchtungslichts in den Lichtleiter zurückreflektiert und einen anderen Teil des Beleuchtungslichts transmittiert. Schließlich umfasst die Vorrichtung auch Mittel zur Homogenisierung der Beleuchtungsstärke von Beleuchtungslicht, welches durch die obere Großseite des Lichtleiters aus diesem tritt und auf die Auflagefläche trifft. Ergänzend oder alternativ umfasst die Vorrichtung auch Mittel zur Homogenisierung einer zu detektierenden Lichtmenge in Abhängigkeit von der Beleuchtungsstärke des aus dem Schutzkörper auf die Auflagefläche treffenden Beleuchtungslichts. Die Homogenisierung erfolgt dabei in Bezug auf die Entfernung zur Lichtquelle bzw. in Abhängigkeit von der Entfernung zu dieser.

Um das Prinzip der Totalreflexion zu verwirklichen, muss ein in dem Lichtleiter propagierender Strahl unter einem entsprechenden Winkel, unter welchem die Totalreflexion möglich ist, auf die obere oder untere Großseite treffen. Der Grenzwinkel für die Totalreflexion wird dabei von den Brechungsindizes der beiden beteiligten Medien bestimmt, Voraussetzung für das Auftreten von Totalreflexion ist außerdem, dass der Brechungsindex des Mediums, in welchem der Strahl propagiert, größer als der des Mediums auf der anderen Seiten der Großseite ist. Im vorliegenden Fall ist der Lichtleiter an seiner oberen Großseite mit einer weiteren Materialschicht, beispielsweise der Spiegelschicht verbunden, beispielsweise indem beide Schichten mit einem transparenten Klebstoff optisch gekoppelt werden, oder auch nur aneinandergelegt und miteinander verklemmt sind, was bei einer mit hoher Genauigkeit polierten Fläche ebenfalls zu einer ausreichenden Verbindung und ausreichendem Grenzflächenkontakt führt. Das an der unteren Großseite anliegende Medium ist Luft.

Ein entlang der Vorzugsrichtung propagierender Lichtstrahl trifft zunächst - je nach Einkoppelrichtung - auf die untere oder obere Großseite. An der unteren Großseite wird er totalreflektiert und unter dem gleichen Winkel in Richtung der oberen Großseite gelenkt. Das Medium auf der anderen Seite der oberen Großseite ist in der Regel nicht Luft, sondern beispielsweise die Spiegelschicht oder eine andere Materialschicht. Die Spiegelschicht reflektiert den Strahl nicht zu 100%, sondern lässt einen Bruchteil des Beleuchtungslichts durch, d.h. transmittiert diesen, während ein anderer, überwiegender Teil reflektiert wird, so dass der Lichtleiter über die gesamte Ausdehnung der Großseiten Licht durch die obere Großseite abstrahlen kann, da Licht den Lichtleiter bis zu einer Abschlussschmalseite, d.h. einer Schmalseite, die der Einkoppelfläche gegenüberliegt, durchdringen kann.

Die transparenten Materialien des Schichtstapels, insbesondere bestehend aus der Spiegelschicht, die Sensorschicht und des Schutzkörpers haben bevorzugt ähnliche Brechungsindizes, so dass ein unter einem von Null verschiedenen Winkel in das Medium eintretender Strahl möglichst wenig gebrochen wird. Dies ist nicht zwingend notwendig, jedoch muss bei der Materialzusammenstellung darauf geachtet werden, dass zumindest der unter der Vorzugsrichtung im Lichtleiter propagierende Lichtstrahl nach Durchtritt durch sämtliche Medien bis zur Unterseite der Auflagefläche auf dem Schutzkörper unter einem solchen Winkel auf dieses trifft, dass der Strahl hier ebenfalls totalreflektiert wird, sofern auf der anderen Seite der Auflagefläche sich das Medium Luft befindet. Der Winkel, den die Vorzugsrichtung zur Normalen der Großseiten des Lichtleiters einschließt, muss also einerseits so gewählt werden, dass an diesen Großseiten selbst Totalreflexion erfolgt, sofern auf der anderen Seite als Medium Luft ist; andererseits muss der Winkel auch so gewählt werden, dass an der Auflagefläche des Schutzkörpers nach Durchtritt durch alle Medien, die schichtförmig gestapelt sind, ebenfalls eine Totalreflexion erfolgt, sofern auf der andern Seite Luft ist. Bei aufgelegtem Finger wird der Strahl nicht total reflektiert, sondern tritt in den Finger hinein und wird in viele Richtungen gestreut, so dass sich die aufliegenden Hautpartikel als dunkle Stellen im Bild zeigen.

Die verschiedenen Schichten werden miteinander optisch gekoppelt, beispielsweise durch optisches Bonden. Die Lichtquelle strahlt Licht nur in einem beschränkten Winkelbereich ab. Um die Einkopplung in den Lichtleiter möglichst effektiv und die Aufweitung des Winkelbereichs durch Brechung möglichst gering zu halten, ist der Winkelbereich, der bei einer im wesentlichen punktförmigen Lichtquelle auch einen Öffnungskegel definiert, bevorzugt symmetrisch um die Vorzugsrichtung orientiert, wobei die Normale der Einkoppelfläche in einer vorteilhaften Ausgestaltung dieser Vorzugsrichtung entspricht bzw. zu ihr parallel liegt.

Die Lichtquelle ist so ausgerichtet, dass sämtliche Winkel, die im beschränkten Winkelbereich enthalten sind, noch zu Strahlen korrespondieren, die nach Eintritt in den Lichtleiter mit den Normalen der Großseiten einen Winkel einschließen, der eine Totalreflexion bei Luft als anliegendem Medium ermöglicht. Die Größe des Öffnungswinkels beschränkt dabei auch die mögliche Dicke des Schutzkörpers, da der Durchmesser eines Öffnungskegels - bei symmetrischem Öffnungswinkel - mit zurückgelegtem Lichtweg größer wird und somit bei dickeren Deckgläsern die Auflösung reduziert wird. Je kleiner der Winkelbereich ist, desto dicker kann der Schutzkörper gewählt werden. Als preislich günstige Lichtquellen eignen sich LEDs. Besonders kleine Öffnungswinkelbereiche lassen sich erzielen, wenn Laser als Lichtquellen verwendet werden.

Bei einer Beschränkung des Winkelbereichs auf 20°, d.h. auf ± 10° Abweichung zur Vorzugsrichtung, kann die Dicke des Schutzkörpers etwa bis zu 0,1 mm betragen, um noch eine Auflösung von 500 dpi zu erreichen, wenn man als Schutzkörper beispielsweise Dünnglas mit einem Brechungsindex von 1,5 verwendet; abhängig vom Material können sich andere Winkelbereiche bzw. Maximaldicken ergeben. Das von der Lichtquelle ausgesandte Licht wird zum auf der Auflagefläche liegenden Finger geführt, wobei die Einfallswinkel des Lichts, die sich aus dem beschränkten Winkelbereich ergeben, bezogen auf die Normale der Auflagenfläche, bevorzugt sämtlich größer sind als der Grenzwinkel der Totalreflektion zwischen dem Schutzkörper und Luft, so dass bei aufliegenden Fingern in den Papillartälern zwischen den Papillarleisten das Licht zurück auf den Sensor reflektiert wird. Diese Totalreflektion wird an den Papillarleisten gestört, so dass diese als dunkle Bereiche erscheinen.

Bei dem Sensor handelt es sich bevorzugt um einen optischen TFT-Sensor, so dass beispielsweise Fingerabdrücke direkt und kontaktbasiert aufgenommen werden können. Der Sensor ist vorteilhaft semitransparent, um möglichst viel Licht des unterhalb der Sensorschicht angeordneten Lichtleiters durchzulassen.

Wesentlicher Bestandteil der Vorrichtung sind die Mittel zur Homogenisierung der Beleuchtungsstärke von Beleuchtungslicht bzw. die Mittel zur Homogenisierung einer zu detektierenden Lichtmenge, jeweils in Abhängigkeit von der Entfernung zur Lichtquelle. Mit der Homogenisierung wird erreicht, dass alle auf der Auflagefläche liegende Autopodien, beispielsweise vier Finger oder eine gesamte Hand, gleichzeitig in der gleichen Qualität beleuchtet bzw. detektiert werden. Dies kann zum einen erreicht werden, indem Beleuchtungslicht, welches durch die obere Großseite des Lichtleiters aus diesem tritt, und welches auf die Auflagefläche trifft, homogenisiert ist, d.h. überall im Mittel die gleiche Beleuchtungsstärke aufweist. Eine andere Möglichkeit besteht darin, nicht das Beleuchtungslicht zu homogenisieren, sondern das zu detektierende Licht bzw. die zu detektierende Lichtmenge. Dies kann ebenfalls in Abhängigkeit von der Beleuchtungsstärke des aus dem Schutzkörper auf die Auflagefläche treffenden Beleuchtungslichts erfolgen, da diese letztendlich auch die zu detektierende Lichtmenge festlegt. Die Homogenisierung erfolgt dabei in Abhängigkeit von der Entfernung zur Lichtquelle. Durch Streuverluste und Auskopplung nimmt die Beleuchtungsstärke bzw. die Intensität des Lichts, welches aus dem Lichtleiter in die Sensorschicht abgestrahlt wird, bei einer homogenen, bis zu einem gewissen Grad von beispielsweise 10% durchlässigen Spiegelschicht, mit zunehmender Entfernung von der Lichtquelle ab, diese Abnahme erfolgt für in sich homogene Schichten kontinuierlich. Ohne eine Homogenisierungsschicht ist daher die Beleuchtungsstärke in der Nähe der Lichtquelle größer. Die Mittel zur Homogenisierung der Beleuchtungsstärke sorgen nun dafür, dass die Beleuchtungsstärke des Beleuchtungslichts, was auf die Auflagefläche trifft, im Wesentlichen überall auf der Auflagefläche homogen, d.h. konstant ist. Dazu muss die Beleuchtungsstärke in der Nähe des Lichtleiters auf einen Wert herabgesetzt werden, der der Beleuchtungsstärke in den am weitesten von der Lichtquelle entfernten Bereichen der Auflagenfläche entspricht. Je näher sich ein Bereich der Auflagefläche an der Lichtquelle befindet, desto stärker muss die Beleuchtungsstärke an dieser Stelle reduziert werden, wohingegen im Bereich der am weitesten entfernten Punkte auf der Auflagefläche die Reduzierung der Beleuchtungsstärke möglichst gering bzw. vernachlässigbar klein sein soll. Zwischen diesen beiden Extrempositionen wird die Beleuchtungsstärke entsprechend reduziert, wobei im Mittel, d.h. über einen repräsentativen Flächenbereich auf der Auflagefläche beispielsweise von der Größe eines Fingergliedes, die Variation bevorzugt kontinuierlich und nicht sprunghaft erfolgt.

Alternativ oder ergänzend kann die Vorrichtung auch Mittel zur Homogenisierung einer zu detektierenden Lichtmenge in Abhängigkeit von der Beleuchtungsstärke des aus dem Schutzkörper auf die Auflagefläche treffenden Beleuchtungslichts umfassen. Dabei wird das Beleuchtungslicht dann zunächst vollständig durchgelassen, beleuchtet die Auflagenfläche also inhomogen und die näher an der Lichtquelle liegenden Autopodien stärker. Die Mittel zur Homogenisierung der zu detektierenden Lichtmenge umfassen dann beispielsweise Blenden, welche über den Sensorelementen bzw. deren lichtempfindlichen Bereichen angeordnet sind. Die Öffnungen dieser Blenden nehmen mit zunehmender Entfernung von der Lichtquelle zu, so dass die auf die lichtempfindlichen Bereiche der Sensorelemente treffende Lichtmenge reguliert wird. In Ergänzung oder alternativ können die Mittel zur Homogenisierung der zu detektierenden Lichtmenge auch eine Ansteuerung zur Variation der Empfindlichkeit der Sensorelemente umfassen. Die Lichtempfindlichkeit der Sensorelemente in der Nähe der Lichtquelle wird reduziert, bzw. die der weiter von der Lichtquelle entfernten erhöht, wobei beides miteinander kombiniert werden kann, um ein bestmögliches Signal-Rausch-Verhältnis zu erhalten. Je höher die Empfindlichkeit, desto größer ist die Lichtmenge, die detektiert wird. Eine weitere Möglichkeit zur Homogenisierung ist das Einbringen einer Schicht zwischen den lichtempfindlichen Sensorelementen und der Auflagefläche, die absorbierend wirkt, wobei der Absorptionsgrad an verschiedenen Orten der Schicht unterschiedlich ist. In der Nähe der Lichtquelle ist die Absorption stark, weiter von der Lichtquelle entfernten ist sie geringer.

In einer besonders bevorzugten Ausgestaltung der Erfindung sind die Mittel zur Homogenisierung der Beleuchtungsstärke an der Spiegelschicht ausgebildet, d.h. die Spiegelschicht übernimmt zusätzlich auch die Funktion einer Homogenisierungsschicht, indem der Reflexionsgrad der Spiegelschicht mit zunehmender Entfernung von der Lichtquelle abnimmt und der Transmissionsgrad der Spiegelschicht zunimmt, was auf verschiedene Weise realisiert werden kann. Die Variation des Reflexionsgrades bzw. des Transmissionsgrades muss dabei mit zunehmender Entfernung nicht kontinuierlich erfolgen, sondern kann auch mehr oder weniger sprunghaft erfolgen oder für einzelne, pixelgroße Bereiche gar nicht: Die Forderung der Abnahme des Reflexionsgrades bzw. der Zunahme des Transmissionsgrades bezieht sich auf Bereiche, welche eine repräsentative Größe in Bezug auf die Gesamtgröße der Auflagefläche haben, beispielsweise etwa 10% der Auflagefläche oder einen Bereich von der Größe eines Fingers oder Fingergliedes. Die Größe und Form der Bereiche hängt dabei auch von der Art und Weise ab, wie die Homogenisierung in der Spiegelschicht erreicht wird. Beispielsweise lässt sich eine Homogenisierung durch ein Muster reflektierender und transmittierender Streifen nach Art eines Strichcodes erreichen, wobei die Streifen parallel zur Lichtquelle verlaufen und die Breite der reflektierenden Streifen mit zunehmender Entfernung von der Lichtquelle abnimmt, während die Breite der transmittierenden Streifen zunimmt. In diesem Fall umfasst ein repräsentativer Bereich in Richtung von der Lichtquelle weg mindestens einen Bereich, welcher dem breitesten Streifen mit höchster Reflexivität und dem danebenliegenden schmalsten Zwischenraum mit geringster Reflexivität bzw. höchstem Transmissionsgrad entspricht. Verschiebt man den repräsentativen Bereich dann sukzessive von der Lichtquelle weg, senkrecht zur Längsrichtung der Einkoppelfläche bzw. der Streifen, so nimmt im repräsentativen Bereich die Reflexivität im Mittel - d.h. über den repräsentativen Bereich gemittelt - ab und die Transmissivität im Mittel zu.

Um die Homogenisierung zu erreichen, umfasst die Spiegelschicht daher bevorzugt reflektierende Bereiche und transmittierende Bereiche, wobei der Anteil der reflektierenden Bereiche pro Flächeneinheit - oder bezogen auf einen Bereich repräsentativer Größe - mit der Entfernung von der Lichtquelle im Mittel abnimmt und der Anteil der transmittierenden Bereiche pro Flächeneinheit mit der Entfernung von der Lichtquelle im Mittel zunimmt. Durch die Formulierung "pro Flächeneinheit" und "im Mittel" wird dabei ausgedrückt, dass bei zunehmender Entfernung von der Lichtquelle ggf. in kleinsten, pixelgroßen Bereichen die Änderung auch sprunghaft oder gar nicht erfolgen kann, sondern dies nur über größere, repräsentative Flächenbereiche erfolgen kann. Die Größe und Form dieser repräsentativen Flächenbereiche hängt von der Größe und Form der transmittierenden bzw. reflektierenden Bereiche ab, und kann in Bezug auf die gesamte Auflagenfläche auch beispielsweise bis zu einem Viertel dieser oder noch mehr betragen.

Vorteilhaft nimmt dabei Dichte - damit ist die Anzahl der Bereiche pro Fläche bzw. Flächeneinheit gemeint - der reflektierenden Bereiche mit zunehmender Entfernung von der Lichtquelle ab, während die Dichte der transmittierenden Bereiche zunimmt. In diesem Fall können die transmittierenden Bereiche - oder in einer anderen Ausführungsform die reflektierenden Bereiche - jeweils die gleiche Größe aufweisen. Alternativ oder ergänzend ist es aber ebenfalls denkbar, dass die Größe der reflektierenden Bereiche mit zunehmender Entfernung von der Lichtquelle abnimmt, während die Größe der transmittierenden Bereiche zunimmt. Ein reflektierender Bereich hat dabei einen Reflexionsgrad von deutlich über 50% des einfallenden Lichtes, beispielsweise zwischen 70% und 90%. Die transmittierenden Bereiche wiederum sollten einen Transmissionsgrad von deutlich über 50% aufweisen, beispielsweise zwischen 70% und 90%.

Die Bereiche selbst können beliebige Formen aufweisen, beispielweise kreisförmig oder rechteckförmig, auch andere polygonale Formen sind denkbar. Die Bereiche können selbst auch durch irreguläre Polygone berandet sein, deren Form beispielsweise stochastisch vorgegeben wird, auf diese Weise lassen sich gegebenenfalls Artefakte bei der Beleuchtung, die aufgrund regelmäßiger Strukturen entstehen können, vermeiden.

Eine andere Möglichkeit, eine Homogenisierung der Beleuchtungsstärke mit Hilfe der Spiegelschicht zu erreichen, besteht darin, die Dicke der Spiegelschicht zu variieren, wobei die Dicke der Spiegelschicht mit zunehmender Entfernung von der Lichtquelle abnimmt, diese Abnahme erfolgt bevorzugt kontinuierlich. Auf diese Weise wird der Transmissionsgrad der Schicht mit zunehmender Entfernung von der Lichtquelle sukzessive erhöht. Die Spiegelschicht kann dann beispielsweise im Schnitt durch den Schichtaufbau - senkrecht zur Auflagefläche und von der Lichtquelle weg - keilförmig ausgebildet sein, zur Bewahrung der Parallelität der Kontaktebenen der verschiedenen Schichten kann diese mit einer transparenten Ausgleichsschicht, ebenfalls in Keilform, kombiniert werden.

Sämtliche Schichten, d.h. Lichtleiter, Spiegelschicht, ggf. eine Ausgleichsschicht, Sensorschicht und Schutzkörper, sind miteinander entsprechend ihrer Stapelreihenfolge optisch gekoppelt. Dies bedeutet, dass sich zwischen zwei Schichten keine Luftschicht befindet, sondern je zwei Schichten direkt miteinander verbunden sind oder durch eine - bevorzugt möglichst dünne - adhäsive Schicht, diese Art der Verbindung wird auch als optisches Bonden bezeichnet.

Eine weitere Möglichkeit, die Homogenisierung zu erreichen, besteht darin, eine Spiegelschicht zu verwenden, bei der die Dichte eines Materials, welches wesentlich für die Reflexionen in der Spiegelschicht verantwortlich ist, mit zunehmender Entfernung von der Lichtquelle abnimmt. Diese Ausführung ist besonders dann vorteilhaft, wenn Licht nur spezieller Wellenlängen verwendet wird, beispielsweise Laserlicht.

Bei der Spiegelschicht kann es sich beispielsweise um einen Metallspiegel handeln, sie kann auf verschiedene Weise hergestellt werden, beispielsweise im Tintendruckverfahren, photolithographisch, mittels PVD (*physical vapor deposition*) oder Laserablation. Die Mittel zur Homogenisierung können an der Spiegelschicht aber auch realisiert werden, indem dieser als Interferenzspiegel ausgestaltet ist, was wiederum bei der Verwendung nur von einzelnen ausgewählten Wellenlängen vorteilhaft ist.

Die Mittel zur Homogenisierung der Beleuchtungsstärke können aber auch eine Absorptionsschicht umfassen, welche zwischen der Spiegelschicht und der Sensorschicht oder zwischen den Sensorelementen in den Durchlassbereichen angeordnet ist, wobei mit zunehmender Entfernung von der Lichtquelle der Absorptionsgrad der Absorptionsschicht für das Beleuchtungslicht abnimmt und der Transmissionsgrad zunimmt. Die Spiegelschicht kann dann durchgehend mit hoher Reflexivität ausgestaltet sein, so dass ein hoher Anteil des Lichtes bis zum Ende des Lichtleiters reflektiert wird, was dort für eine vergleichsweise höhere Helligkeit sorgt.

Um die Winkelverteilung um die Vorzugsrichtung möglichst symmetrisch und möglichst beschränkt zu halten, ist es vorteilhaft, wenn die Normale der Einkoppelfläche parallel zur Vorzugsrichtung liegt, die Einkoppelfläche also mit der oberen oder unteren Großseite einen spitzen Winkel einschließt. Die Winkelverteilung sollte bevorzugt so gewählt werden, dass sämtliche Winkel, unter denen Licht eingekoppelt wird, zu einer Totalreflexion führen, um die Verluste möglichst gering zu halten und eine möglichst hohe Bildqualität zu realisieren.

Um das Entstehen von Doppel- oder Mehrfachbildern im Bereich des Sensors zu verhindern, sind zur Reduzierung der Reflexion an einer als Abschlussschmalseite ausgebildeten Schmalseite des Lichtleiters, welche der Einkoppelfläche in Lichtausbreitungsrichtung gegenüberliegt, Mittel zur Unterdrückung der Ausbildung rücklaufender Stahlen ausgebildet bzw. angeordnet. Die Reduzierung der Reflexion am Ende des Lichtleiters lässt sich beispielsweise erreichen, indem an diesem Ende eine absorbierende Schicht aufgebracht ist oder die Kanten aufgeraut werden. Eine weitere Möglichkeit, die mit der vorangehend genannten kombiniert werden kann, besteht auch im Anbringen einer Fase ähnlich der Einkoppelfläche, d.h. die Abschlussschmalseite ist dann im Wesentlichen senkrecht zur Ausbreitungsrichtung von entlang der Vorzugsrichtung in den Lichtleiter eingetretenen Lichts angeordnet, wobei die Ausbreitungsrichtung des Lichtes vom Eintrittswinkel und im Bereich der Abschlussschmalseite von der Ausdehnung des Lichtleiters im Ausbreitungsrichtung abhängt. Auch eine Ausgestaltung mit mehreren Absorptionsflächen, die vorzugsweise mit Absorptionsschichten versehen sind und paarweise jeweils miteinander von 0° und 180° verschiedene Winkel einschließen, ist denkbar. Die Winkel werden dabei in Abhängigkeit von der Ausbreitungsrichtung des Lichts so vorgegeben, dass die Absorption maximiert wird. Die tatsächliche Lage der Absorptionsflächen hängt ebenfalls von der Orientierung der Vorzugsrichtung in Bezug auf die Großseiten und von der Längsausdehnung des Lichtleiters zwischen Einkoppelfläche und Abschlussschmalseite ab, die Maximierung der Absorption ist diesbezüglich ein konstruktives Problem mit einer Vielzahl von gleichwertigen Möglichkeiten.

Der Schutzkörper weist vorteilhaft eine Dicke zwischen 50 µm und 1000 µm auf, wie bereits weiter oben ausgeführt, ist er mit der Sensorschicht optisch gekoppelt. Der Schutzkörper kann aus verschiedenen Materialien bestehen, beispielsweise aus Glas, Keramik oder Kunststoff. Je schmaler der Lichtkegel um die Vorzugsrichtung, d.h. das eingestrahlte Winkelspektrum ist, desto größer kann die Dicke des Schutzkörpers gewählt werden, d.h. die Auflagefläche von der Sensorschicht entfernt sein. Da im Gegensatz zum Stand der Technik, wo eine interne diffuse Beleuchtung verwendet wird, erfindungsgemäß eine gerichtete Kantenbeleuchtung mittels LED oder Lasern genutzt wird und der Effekt der gestörten Totalreflexion ausgenutzt wird, kann auf kommerziell verfügbares Dünnglas von mehr als 50 µm Dicke zurückgegriffen werden, welches sich in der Beschaffung und Prozessierbarkeit, d.h. der Prozessstabilität beim optischen Bonden oder bei der Beschichtung, weniger aufwendig gestaltet. Außerdem lassen sich auch rückstandsfrei entfernbare Schutzfolien oder Schutzgläser als Schutzkörper verwenden, wie sie in der Displayindustrie eingesetzt werden, womit eine Erneuerung des Sensorschutzes durch vereinfachte Austauschbarkeit gegeben ist. Ebenso lassen sich transparente Keramiken verwenden. Aufgrund der erhöhten Dicke des Schutzkörpers ist die Sensorschicht mechanisch und chemisch äußerst stabil gekapselt. Darüber hinaus lässt sich das Gesamtmodul sowohl mit einem geringen Gewicht von weniger als 300 g als auch dünn mit einer Dicke von weniger als 2,5 cm herstellen.

Zwischen der Auflagefläche und der Sensorschicht ist vorteilhaft zur Unterdrückung der Detektion von Umgebungslicht eine Blendenschicht angeordnet, wobei jeweils eine Blende über einem Sensorelement angeordnet ist. Dies dient dem Umgebungslichtschutz, da entsprechend der Anforderungen einiger Anwender die Sensoren auch bei Bestrahlung im direkten Sonnenlicht funktionieren müssen. Durch die Blenden wird das detektierbare Winkelspektrum auf den relevanten Bereich, der durch die Einkoppelbedingungen des Lichts festgelegt ist, beschränkt. Ergänzend oder alternativ kann zwischen der Auflagefläche und der Sensorschicht auch eine Spektralfilterschicht ausgebildet sein, bzw. kann der Schutzkörper selber als Spektralfilterschicht ausgebildet sein. Die Spektralfilterschicht kann auch nur Teil des Schutzkörpers sein. Auch ist es möglich, die Sensorelemente selbst wellenlängenselektiv nur für Licht der Beleuchtungswellenlängen auszubilden. Alle Maßnahmen lassen sich auch miteinander kombinieren.

Eine Einschränkung des Spektralbereichs durch eine Integration der Spektralfilterschicht in den Schutzkörper lässt sich beispielsweise mit absorbierenden organischen oder anorganischen Farbstoffen, Partikeln, plasmonischen Filtern - resonanten Metall-Nanopartikeln - oder Interferenzfiltern erreichen. Falls zur Verbindung des Schutzkörpers mit der Sensorschicht ein Klebstoff verwendet wird, so lässt sich der Umgebungslichtschutz auch in diesen integrieren, die Spektralfilterschicht entspricht dann der Klebstoffschicht. Durch einen strukturierten Spektralfilter ist ein pixelgenauer Umgebungslichtschutz möglich. Hier wird nur das Licht spektral gefiltert und durchgelassen, das vom aufzunehmenden Hautbereich durch die Auflagefläche hindurch zum lichtsensitiven Bereich des Sensorelements propagiert, nicht aber die Lichtstrahlen der Beleuchtung, die durch die die Sensorkomponente und die Auflagefläche hindurch propagieren und den aufzunehmenden Hautbereich beleuchten.

In einer besonders bevorzugten Ausgestaltung der Erfindung ist unterhalb der unteren Großseite des Lichtleiters eine Zusatzlichtquelle angeordnet, welche von der unteren Großseite des Lichtleiters beabstandet ist. Zwischen dem Lichtleiter und der Zusatzlichtquelle befindet sich dabei eine Schicht, deren Brechzahl geringer ist, als die des Lichtleiters. Die Lichtleitung im Lichtleiter soll dadurch nicht verhindert werden, ein Luftspalt zwischen Lichtleiter und Zusatzlichtquelle ist eine Realisierungsmöglichkeit. Die Zusatzlichtquelle strahlt flächenförmig Licht ab, sie kann beispielsweise als Hintergrundbeleuchtung, wie es in der Display-Industrie verwendet wird, oder auch als komplettes Display ausgestaltet sein. Ein Display ermöglicht die Darstellung von Informationen auf der Auflagefläche, eine direkte Benutzerführung wird auf diese Weise ermöglicht. Die flächenförmig Licht abstrahlende Zusatzlichtquelle ist dabei nicht direkt an der unteren Großseite des Lichtleiters angeschlossen, mit diesem also nicht optisch gekoppelt; beispielsweise befindet sich zwischen beiden eine dünne Luftschicht, um die Totalreflexion an der unteren Großseite nicht zu stören. Mittels der Zusatzlichtquelle ist es möglich, auch Dokumente aufzunehmen, da das Licht dieser Lichtquelle in der Regel ungerichtet ist und das Prinzip der Totalreflexion hier keine Anwendung findet. Vorteilhaft ist jedoch die Beleuchtungsstärke der Zusatzlichtquelle an den Transmissionsgrad der Mittel zur Homogenisierung angepasst, so dass auch bei der Aufnahme von Dokumenten das aufzunehmende Objekt möglichst überall mit der gleichen Beleuchtungsstärke beleuchtet wird.

Die Zusatzlichtquelle kann dabei so ausgebildet sein, dass sie - bevorzugt per Steuerung - gleichzeitig oder nacheinander Licht in mehreren unterschiedlichen Wellenlängen oder in mehreren unterschiedlichen - insbesondere einander nicht überlappenden - Wellenlängenbereichen abstrahlt. Dies ermöglicht Kontrollaufnahmen für Echtheitsprüfungen von Sicherheitsdokumenten und Geldscheinen. Dazu ist es vorteilhaft, dass die Lichtquelle neben den, für das menschliche Auge, sichtbaren Wellenlängenbereichen auch Licht im IR- oder im UV-Bereich abstrahlen kann. Zur farbigen Aufnahme von Dokumenten ist es außerdem vorteilhaft, wenn die Zusatzlichtquelle Licht aus dem roten, dem blauen und dem grünen Wellenlängenbereich nacheinander abstrahlen kann. Licht dieser Wellenlängenbereiche ist mittels einer Steuerung, bevorzugt einzeln zu- und abschaltbar, insbesondere wenn die Sensorelemente nur die Intensität, nicht jedoch die Farben registrieren - mittels entsprechender Bildverarbeitungsalgorithmen lässt sich dann ein Farbbild berechnen.

Die Zusatzbeleuchtung kann auch aus einzelnen Lichtquellen bestehen, diese können dann auch zwischen Sensorschicht und Spiegelschicht angeordnet sein, in diesem Fall kann auf eine Anpassung der Beleuchtungsstärke an den Transmissionsgrad der Homogenisierungsmittel verzichtet werden. Eine Anordnung unterhalb des Lichtleiters ist jedoch zu bevorzugen, da man hier eine größere Flexibilität hinsichtlich der Wahl der Zusatzlichtquelle hat und das Element, was diese Zusatzlichtquelle trägt, nicht transparent sein muss. Zudem muss vom Beleuchtungslicht dann keine weitere Schicht durchdrungen werden, was in jedem Falle mit Verlusten verbunden ist. Die Lichtquelle, welche das Beleuchtungslicht für die Aufnahme der Hautbereiche abstrahlt, kann vorteilhaft abgeschaltet werden, wenn die Zusatzbeleuchtung verwendet wird.

### Kurze Beschreibung der Zeichnungen

Nachfolgend wird die Erfindung beispielsweise anhand der beigefügten Zeichnungen, die auch erfindungswesentliche Merkmale offenbaren, noch näher erläutert. Es zeigen:
- Fig. 1: den prinzipiellen Aufbau einer Vorrichtung zur Aufnahme von Fingerabdrücken,
- Fig. 2a-f: verschiedene Ausführungen von in eine Spiegelschicht integrierten Homogenisierungsmitteln,
- Fig. 3a-e: verschiedene Ausgestaltungen einer Abschlussschmalseite zur Verhinderung von Rückreflexen,
- Fig. 4: den Strahlverlauf von Beleuchtungslicht für einen Winkelbereich,
- Fig. 5: eine Ausführung der Vorrichtung mit dickem Schutzkörper,
- Fig. 6: eine Ausführung der Vorrichtung mit Blenden über den Sensorelementen,
- Fig. 7a,b: die Funktion eines Sensorelements mit eingeschränkter Apertur und Blende,
- Fig. 8: eine Ausführung der Vorrichtung mit einer Spektralfilterschicht,
- Fig. 9a-c: verschiedene Ausgestaltungen der Lichteinkopplung,
- Fig. 10: eine Vorrichtung zur Aufnahme von Hautbereichen mit einer Zusatzlichtquelle zur Aufnahme von Dokumenten,
- Fig. 11: eine Vorrichtung in der Draufsicht mit Blenden verschiedener Größe zur Homogenisierung und
- Fig. 12: eine Anordnung mit einer Absorptionsschicht variierender Dicke zur Homogenisierung.

### Ausführliche Beschreibung der Zeichnungen

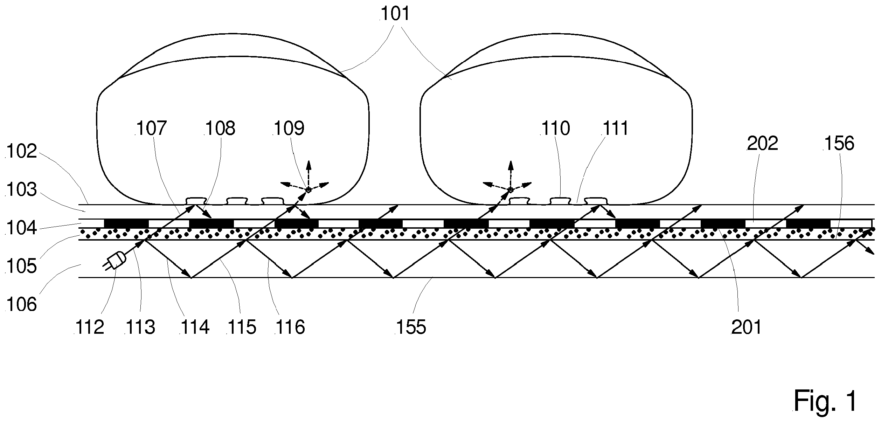

Fig. 1 zeigt den prinzipiellen Aufbau einer Vorrichtung zur kontaktbasierten gleichzeitigen Aufnahme von Abdrücken mehrerer durchbluteter Hautbereiche menschlicher Autopodien mittels gestörter Totalreflexion. Gezeigt ist ein Ausschnitt der Vorrichtung entlang der Richtung, in der Licht abgestrahlt wird. Beispielhaft sind hier als Autopodien zwei Finger 101 auf eine Aufnahmefläche 102 aufgelegt, welche den Abschluss eines Schutzkörpers 103 vorgegebener Dicke bildet. Die Auflagefläche 102 weist dabei eine Größe auf, die die gleichzeitige Auflage mehrerer Autopodien ermöglicht. Von den Fingern 101 aus gesehen ist unterhalb des Schutzkörpers 103 eine Sensorschicht 104 angeordnet, welche arrayförmig angeordnete, lichtempfindliche Sensorelemente 201, die im Folgenden auch als Pixel bezeichnet werden, umfasst. Die Sensorelemente 201 sind zur Detektion von Licht mindestens eines vorgegebenen Wellenlängenbereichs - der mindestens eine Wellenlänge umfasst - ausgelegt. Zwischen den lichtempfindlichen Sensorelementen 201 sind Durchlassbereiche 202 angeordnet, welche für Licht mindestens eines vorgegebenen Beleuchtungswellenlängenbereichs transparent sind. Von den Fingern 101 aus gesehen weiter unterhalb der Sensorschicht 104 ist ein Lichtleiter 106 aus einem für Licht des vorgegebenen Beleuchtungswellenlängenbereichs transparenten Material angeordnet.

Der Lichtleiter 106 ist in Form einer planparallelen Platte ausgebildet und weist eine untere Großseite 155 und eine obere Großseite 156 auf, welche zur unteren Großseite 155 parallel angeordnet und der Sensorschicht 104 zugewandt ist. Die beiden Großseiten 155, 156 werden durch mehrere Schmalseiten miteinander verbunden, welche in Fig. 1, die einen Ausschnitt aus einer Vorrichtung zeigt, nicht dargestellt sind. Eine der Schmalseiten ist als Einkoppelfläche für Beleuchtungslicht ausgebildet. Entlang einer Längsrichtung der Einkoppelfläche, hier also senkrecht zur Blattebene, ist eine Lichtquelle 112 angeordnet, die das Beleuchtungslicht abstrahlt.

Die Lichtquelle 112 strahlt Licht in einem beschränkten Winkelbereich um eine Vorzugsrichtung 113 ab, die Vorzugsrichtung 113schließt mit den beiden Großseiten 155, 156einen Einfallswinkel ein, welcher so vorgegeben ist, dass Licht, welches in den Winkelbereich abgestrahlt wird, nach Eintritt in den Lichtleiter 106 an den beiden Großseiten 155, 156 im Falle eines daran anliegenden Mediums mit einem Brechungsindex von Luft totalreflektiert würde. An der unteren Großseite 155 liegt als Medium tatsächlich Luft an, so dass die Bedingung der Totalreflexion dort erfüllt ist. An der oberen Großseite 156 befindet sich jedoch eine zwischen der Sensorschicht 104 und dem Lichtleiter 106 angeordnete Spiegelschicht 105, welche einen Teil des Beleuchtungslichts in den Lichtleiter 106 zurückreflektiert und einen anderen Teil des Beleuchtungslichts transmittiert. Schutzkörper 103, Sensorschicht 104, Spiegelschicht 105 und Lichtleiter 106 sind jeweils entsprechend ihrer Schichtfolge miteinander optisch gekoppelt, d.h. beispielsweis durch optisches Bonden miteinander verklebt. Der Klebstoff und die Materialien der Schichten sind so gewählt, dass sie möglichst ähnliche Brechungsindizes aufweisen, um das Einfallswinkelspektrum um die Vorzugsrichtung 113 so gering wie möglich aufzufächern.

Das von der Lichtquelle 112 emittierte Licht wird entlang der Vorzugsrichtung 113 in den Lichtleiter 106 eingekoppelt. An der unteren Großseite 155 des Lichtleiters 106 erfolgt dabei eine Totalreflexion des Lichts. Durch die zwischen dem Lichtleiter 106 und der Sensorschicht 104 liegende Spiegelschicht 105 wird bei jeder Reflexion nur ein Bruchteil des Lichts als transmittierter Strahl 107 transmittiert und durch die Durchlassbereiche 202 in der Sensorschicht 104 und durch den Schutzkörper 103 zur Auflagefläche 102 geleitet.

Auf diese Weise wird sichergestellt, dass das im Lichtleiter 106 geführte Licht über viele Reflexionen nur geringfügig reduziert wird. Ohne Spiegelschicht 105 würde je nach Transmissionsgrad der Sensorschicht 104 ein großer Anteil des Lichts in der Sensorschicht 104 absorbiert werden, was zu einer sehr ungleichmäßigen Ausleuchtung führen würde, die außerdem noch abhängig von der Position der aufgelegten Finger 101 ist. Ohne Reflexionsschicht würde die Beleuchtungsintensität mit zunehmender Entfernung zur Lichtquelle 112 zudem noch stärker abfallen, dieser Abfall wird durch die Spiegelschicht 105 gemindert.

Hat ein aufliegendes Objekt wie die hier beispielhaft gezeigten Finger 101 am Reflexionspunkt des transmittierten Strahls 107 an der Auflagefläche 102 keinen Kontakt zu dieser, so erfolgt eine Totalreflexion. Ein an der Auflagefläche 102 reflektierte Strahl 108 trifft auf das Sensorelement 201 und wird aufgrund dessen Lichtempfindlichkeit registriert. Das korrespondierende Sensorelement 201 liegt gegenüber dem Reflexionspunkt auf der Auflagefläche 102 um Δz=d·tan(α) von der Lichtquelle weg verschoben, wobei d die Dicke des Schutzkörpers 103 und α den Winkel des reflektierten Strahls 108 zur Flächennormalen der Auflagefläche 102 bezeichnet.

Hautbereiche, insbesondere Finger, sind keine glatten Flächen. Finger beispielsweise haben Papillartäler und Papillarleisten, so dass die bekannten, individuellen Strukturen entstehen. Bei den hier gezeigten Fingern 101 haben die Papillartäler 110 keinen Kontakt zur Auflagefläche 102, der Strahl wird hier totalreflektiert und registriert. Mit den Papillarleisten 111 liegen die Finger 101 jedoch auf der Auflagenfläche 102 auf, die Finger 101 haben an dieser Stelle Kontakt zur Auflagefläche 102. Der transmittierte Strahl 107 dringt dort in den Finger 101 ein. Das Licht wird innerhalb des Fingers an natürlich vorhandenen Streuzentren 109 gestreut, der überwiegende Teil des Lichtes bleibt im Finger, nur ein Bruchteil wird wieder über die Auflagefläche 102 in den Schutzkörper 103 eingekoppelt und hat die Möglichkeit, das lichtempfindliche Sensorelement 201 zu treffen. Papillarleisten machen sich also durch eine geringere Intensität im Bild bemerkbar, ihr Bild ist dunkler als das der Papillartäler 110. Insgesamt entsteht auf diese Weise ein Hell-DunkelMuster über alle Sensorelemente 201 der Sensorschicht 104, das den Abdrücken der aufliegenden Finger 101 entspricht. Der Schutzkörper 103 dient dabei als optisches Medium, um die durch die Durchlassbereiche 202 getretenen transmittierten Strahlen 107 mit Beleuchtungslicht auf die lichtempfindlichen Sensorelemente 201 zu leiten, wo das Licht entsprechen der Intensität in ein elektrisches Signal gewandelt wird. Außerdem dient der Schutzkörper 103 auch dem Schutz der Sensorschicht 104 vor Beschädigung oder Zerstörung durch aufliegende Objekte.

Ein Strahl, der entlang der Vorzugsrichtung 113 in den Lichtleiter 106 eintritt, wird beim Auftreffen auf die obere Großseite 156 in einen transmittierten Strahl 107 und einen reflektierten Strahl 114 aufgeteilt, aufgrund der Spiegelschicht 105 wird nur ein Bruchteil des Lichts als transmittierter Strahl 107 weitergeführt. Der reflektierte Strahl 114 wird an der unteren Großseite 155 abermals reflektiert und trifft als reflektierter Strahl 115 wieder auf die obere Großseite 156, wo abermals ein Bruchteil als transmittierter Strahl ausgekoppelt und durch die Spiegelschicht 105 bis zur Auflagefläche 102 geführt wird, während ein überwiegender Anteil des Strahls 115 abermals reflektiert wird und als reflektierter Strahl 116 zur unteren Großseite 155 gelenkt wird. Bei jeder Reflexion an der oberen Großseite 156 wird ein geringer Teil der Intensität ausgekoppelt und transmittiert, so dass die Intensität des im Lichtleiter 106 propagierenden Strahls mehr und mehr vermindert wird.

Zwar sinkt die Beleuchtungsintensität bei der Verwendung einer Spiegelschicht 105 mit zunehmender Entfernung von der Lichtquelle 112 in geringerem Umfang als ohne eine solche Spiegelschicht 105, dabei muss der Reflexionsgrad der Spiegelschicht 105 so hoch wie möglich gewählt werden, um den Beleuchtungsabfall so gering wie möglich zu halten. Dadurch wird das System ineffizienter, da ein großer Teil des Lichts ungenutzt durch den Lichtleiter 106 geführt wird und am Ende ausgekoppelt oder absorbiert wird. Zur Korrektur des Beleuchtungsabfalls, um ein möglichst gleichmäßig ausgeleuchtetes und helles Bild zu erhalten, weist die Vorrichtung daher Mittel zur Homogenisierung der Beleuchtungsstärke von Beleuchtungslicht, welches durch die obere Großseite 156 des Lichtleiters 106 aus diesem tritt und auf die Auflagefläche 102 trifft, auf. Ergänzend oder alternativ umfasst die Vorrichtung Mittel zur Homogenisierung einer zu detektierenden Lichtmenge in Abhängigkeit von der Beleuchtungsstärke des aus dem Schutzkörper 103 auf die Auflagefläche 102 treffenden Beleuchtungslichts. Die Homogenisierung bezieht sich dabei auf den Abfall der Beleuchtungsstärke mit zunehmender Entfernung von der Lichtquelle 112, erfolgt also in der Abhängigkeit von der Entfernung von der Lichtquelle 112, wobei ggf. ein nichtlinearer Verlauf des Abfalls der Beleuchtungsstärke berücksichtigt wird. Die Mittel zur Homogenisierung der Beleuchtungsstärke oder der zu detektierenden Lichtmenge lassen sich auf verschiedene Weise realisieren, einige werden im Folgenden beispielhaft erläutert.

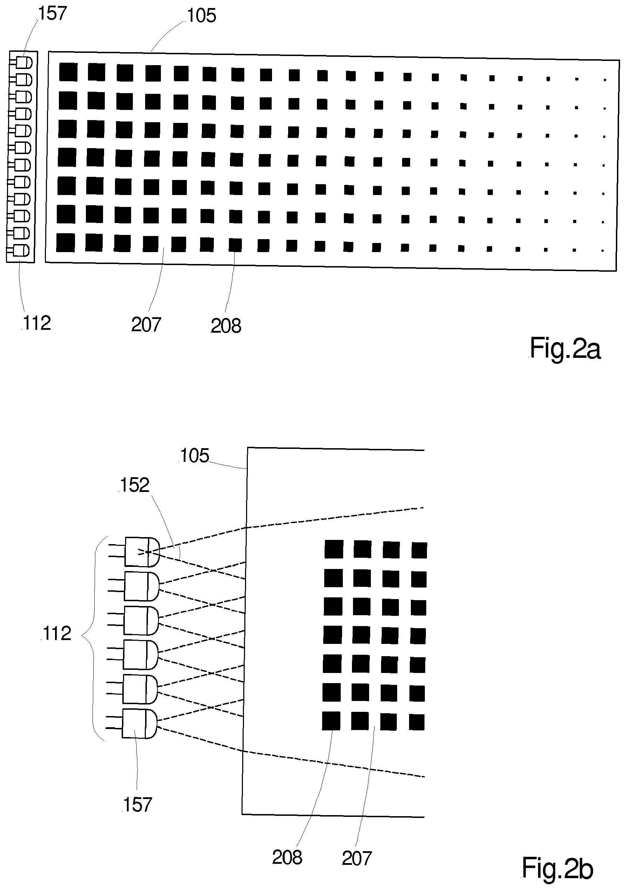

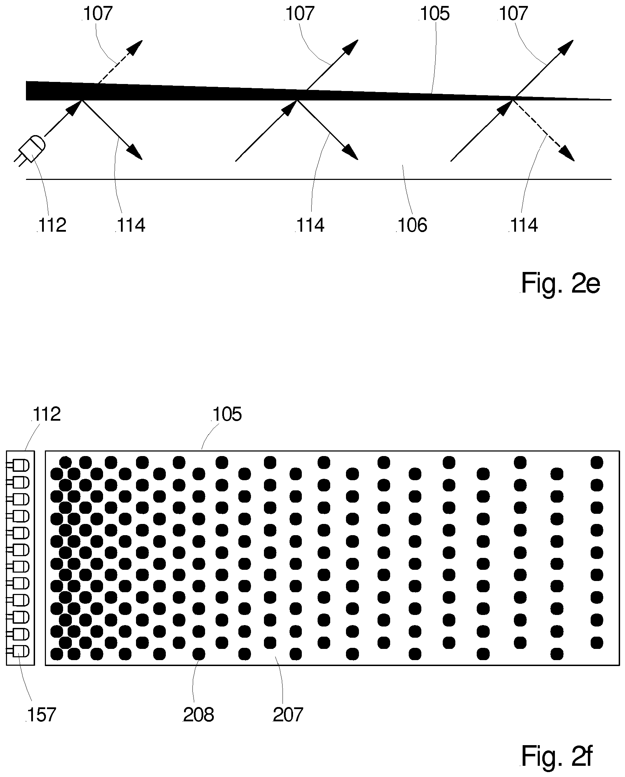

Eine erste Möglichkeit besteht darin, die Mittel zur Homogenisierung der Beleuchtungsstärke an der Spiegelschicht 105 auszubilden, die Spiegelschicht 105 ist mit der Sensorschicht 104 und dem Lichtleiter 106 optisch gekoppelt, wie bereits vorangehend erläutert wurde. Eine Ausbildung der Mittel zur Homogenisierung an der Spiegelschicht 105 umfasst dabei eine Ausgestaltung der oben beschriebenen Spiegelschicht 105 dahingehend, dass der Reflexionsgrad der Spiegelschicht 105 mit zunehmender Entfernung von der Lichtquelle 112 abnimmt und der Transmissionsgrad zunimmt. Beispiele für solche Spiegelschichten, die mit wachsendem Abstand zur Lichtquelle 112 einen sinkenden Reflexionsgrad und einen steigenden Transmissionsgrad aufweisen, sind in den Fig. 2a - 2f dargestellt. Bei den in den Fig. 2a - 2d und 2f dargestellten Ausführungsbeispielen wird dies über eine Änderung des Flächenanteils von reflektierenden Bereichen 208 und transmittierenden Bereichen 207 realisiert, wobei ein repräsentativer Flächenanteil, für den der Reflexionsgrad bestimmt wird, einen Ausschnitt umfassen muss, der wesentlich größer als die Ausdehnung der einzelnen reflektierenden Bereiche 208 bzw. transmittierenden Bereiche 207 ist, so dass der Anteil der reflektierenden Bereiche 208 pro Flächeneinheit mit der Entfernung von der Lichtquelle 112 im Mittel abnimmt und der Anteil der transmittierenden Bereiche 207 pro Flächeneinheit mit der Entfernung von der Lichtquelle 112 im Mittel zunimmt.

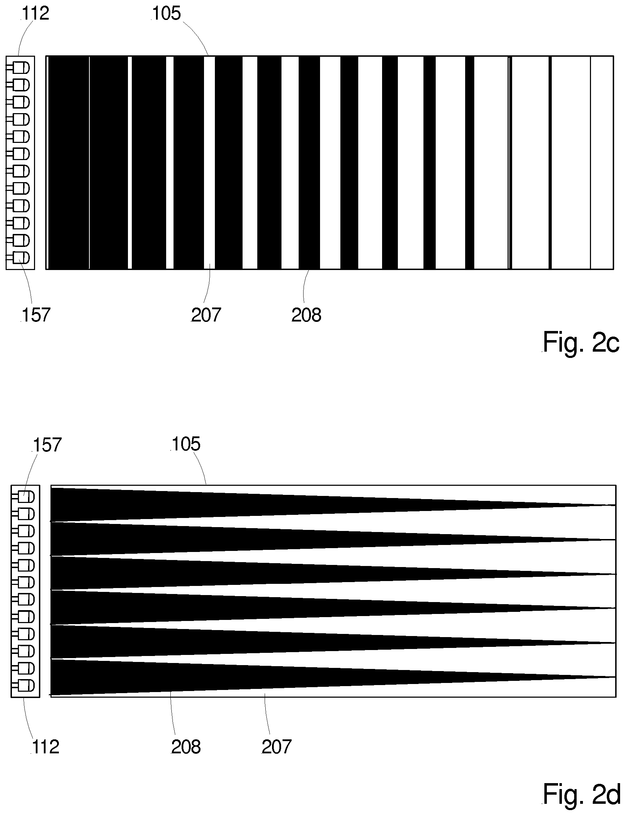

In Fig. 2a, die die Spiegelschicht 105 in einer Draufsicht von oben - die Auflagefläche liegt dann parallel zur Blattebene, ebenso in Fig. 2b, c, d, f, wobei zum besseren Verständnis die Sensorschicht 104 und der Schutzkörper 103 weggelassen wurden - zeigt, sind die reflektierenden Bereiche 208 beispielhaft rechteckig, genauer quadratisch ausgestaltet, ihre Anzahl pro Flächeneinheit, d.h. pro repräsentativem Flächenbereich ist konstant, wohingegen die Fläche - d.h. die Größe - der reflektierenden Bereiche 208 mit zunehmender Entfernung von der Lichtquelle 112, die linienförmig Licht abstrahlend ausgebildet ist, und beispielsweise aus einer Vielzahl von nebeneinander angeordneten LED 157 gebildet werden kann, reduziert wird, so dass der Anteil der transmittierenden Bereiche 207 vergrößert wird. Die reflektierenden Bereiche 208 können dabei grundsätzlich jede beliebige geometrische Form aufweisen, sie können als Polygone, Sterne, Kreise, Ellipsen, Ringe ausgestaltet sein oder auch irreguläre Formen aufweisen. Der Anteil der reflektierenden Bereiche 208 kann dabei - im Mittel über eine repräsentative Fläche - linear abnehmen oder für noch einen besseren Ausgleich des Beleuchtungsabfalls an einen berechneten oder gemessenen nichtlinearen Abfall der Beleuchtungsintensität bzw. Beleuchtungsstärke angepasst sein. Neben der Größe der reflektierenden Bereiche 208 bzw. der transmittierenden Bereiche 207 kann auch deren Anzahl oder deren Abstand zueinander entlang des Abstandes von der Lichtquelle 112 variiert werden, diese Variation kann ebenfalls vereinfacht linear oder an die tatsächlichen Beleuchtungsverhältnisse angepasst erfolgen. Die in Fig. 2a und 2b schachbrettartig angeordneten reflektierenden Bereiche 208 können, bei einer Anordnung in Reihen parallel zur linienförmigen Beleuchtung 112, in aufeinanderfolgenden Reihen auch versetzt zu den reflektierenden Bereichen der vorherigen oder nachfolgenden Reihe liegen. Die Variation der Abstände, der Größe oder der Anzahl der Bereiche kann auch miteinander kombiniert werden, um ein optimales Ergebnis zu erzielen.

Fig. 2b zeigt ein Detail des Aufbaus aus Fig. 2a. Die Lichtquelle 112 wird hier durch einzelne LED gebildet, die entlang der Einkoppelfläche parallel zur einer Dimension der flächenhaften Ausdehnung der Sensorschicht 104 aneinandergereiht werden, um eine Linienlichtquelle zu formen, deren Länge vorzugsweise mindestens der korrespondierenden Dimension der Sensorschicht 104 entspricht. Die einzelnen LED 157 sind dabei so angeordnet, dass die von ihnen in einem Öffnungswinkel 152 in einer zur Auflagefläche 102 parallelen Ebene ausgesandten Lichtbündel sich so überlappen, dass bei der Reflexion der Strahlen auf die lichtempfindlichen Sensorelemente 201 immer eine Durchmischung der Bündel und damit eine Homogenisierung der Ausleuchtung der Auflagenfläche 102 in Längsrichtung, d.h. entlang der von der Lichtquelle 112 gebildeten Linie, gewährleistet ist. Die LED 157 - hier können auch Laser als Einzellichtquellen verwendet werden - lassen sich vorteilhaft einzeln über eine Steuerung ansteuern, auf diese Weise können Ungleichförmigkeiten der Ausleuchtung weiter reduziert werden. Die Steuerung kann mit einer Auswertung der Bildinhalte verknüpft werden, so dass eine aktive Steuerung der einzelnen LED 157 während der Bildaufnahme für eine Verbesserung der Kontraste im Bild und eine bessere Aussteuerung der Sensorelemente 201 genutzt wird.

Fig. 2c zeigt eine weitere Ausführungsform einer Spiegelschicht, an der Mittel zur Homogenisierung streifenförmig ausgebildet sind. Die transmittierenden Bereiche 207 sind als weiße, die reflektierenden Bereiche 208 als schwarze Streifen dargestellt. Die transmittierenden Bereiche 207 und die reflektierenden Bereiche 208 erstrecken sich jeweils über die gesamte Ausdehnung längs der Lichtquelle 112, d.h. im Wesentlichen quer zur Lichtausbreitungsrichtung. Die Veränderung der Transmission wird auch hier durch eine Veränderung der Größe der Bereiche erreicht, in der für die Darstellung gewählten Ansicht wird die Breite der schwarzen reflektierenden Bereiche 208 und der weißen transmittierenden Bereiche 207, d.h. die Ausdehnung entlang der Lichtausbreitung variiert. Die Homogenisierung der Beleuchtungsstärke kann auch über eine lineare oder angepasste Verringerung der Abstände zwischen den reflektierenden Bereichen 208 entlang der Beleuchtungsrichtung bei dann konstanter Größe der reflektierenden Bereiche 208 erfolgen, oder aber auch durch eine Kombination von Größen- und Abstandsänderung.

Fig. 2d zeigt eine weitere Ausführungsform einer Spiegelschicht 105 mit zunehmendem Transmissionsgrad bei zunehmender Entfernung von der Lichtquelle 112, d.h. längs zur Beleuchtungsrichtung. Die Veränderung des Transmissionsgrads wird hier durch eine Vergrößerung der transmittierenden Bereiche 207 und einer entsprechenden Verkleinerung der reflektierenden Bereiche 208 quer zur Beleuchtungsrichtung, d.h. parallel zur Linienlichtquelle, mit wachsender Entfernung zur Lichtquelle 112 erreicht, die Ausdehnung der reflektierenden Bereiche 208 in Längsrichtung der Lichtquelle 112 nimmt mit zunehmender Entfernung von der Lichtquelle 112 ab. Die Abnahme der Größe der reflektierenden Bereiche 208 entlang der Beleuchtungsrichtung erfolgt hier, wie an den geraden Linien zu erkennen ist, linear, die Trennlinien zwischen transmittierenden Bereichen 207 und reflektierenden Bereichen 208 sind Geraden, was für die Herstellung einfacher ist. Auch hier ist eine Anpassung an die tatsächlichen Beleuchtungsverhältnisse möglich, die Korrektur kann verbessert werden, wenn die Linien beispielsweise einen an den tatsächlichen Verlauf des Abfalls der Beleuchtungsstärke angepasste Kurvenform haben.

Fig. 2f zeigt eine weitere Ausführungsform einer Spiegelschicht 105, bei der die Transmission mit steigender Entfernung von der Lichtquelle 112 zunimmt. Die reflektierenden Bereiche 208 haben hier rein beispielhaft eine leicht herzustellende Kreisform und weisen sämtlich die gleiche Größe auf. Die kreisförmigen reflektierenden Bereiche 208 sind hier so angeordnet, dass ihr Abstand in Beleuchtungsrichtung mit zunehmender Entfernung von der Lichtquelle 112 zunimmt. Entlang der Längsrichtung, d.h. parallel zur Lichtquelle, sind die kreisförmigen reflektierenden Bereiche 208 jeweils reihenweise versetzt zueinander angeordnet, so dass eine besonders dichte Anordnung im Bereich der Lichtquelle 112 möglich wird. Auf diese Weise kann man bei gleichbleibenden Dickenverhältnissen von Sensorebene 104 und Schutzkörper 103 größere reflektierende Bereiche 208 und / oder größere transmittierenden Bereiche 207 verwenden, ohne dass sich deren projizierte Struktur für das in der Ebene mit den Sensorelementen 201 entstehende Bild eines aufliegenden Objekts qualitätsmindernd auswirkt. Parallel zu der von den LED 157 geformten linienförmig Licht abstrahlenden Lichtquelle 112 sind die reflektierenden Bereiche 208 in diesem Beispiel jeweils gleich beabstandet, dies ist jedoch nicht zwingend.

Eine weitere Ausführung mit in die Spiegelschicht integrierten Mitteln für die Homogenisierung zeigt Fig. 2e, der dargestellte Schnitt liegt senkrecht zur Auflagefläche 102. Hier nimmt die Dicke der Spiegelschicht 105 mit zunehmender Entfernung von der Lichtquelle 112 ab, auf diese Weise wird der Transmissionsgrad der Spiegelschicht 105 erhöht und konsequenterweise der Reflexionsgrad erniedrigt. Auch hier kann die Dicke mit der Entfernung linear abnehmen oder speziell einen an einen berechneten oder gemessenen Abfall der Beleuchtungsstärke angepasst sein. Ist die Spiegelschicht 105 keilförmig ausgebildet, so kann sie mit einer Ausgleichsschicht aus einem transparenten Material optisch verbunden sein, welches vorzugsweise einen ähnlichen Brechungsindex wie die anderen Materialen aufweist, um die Aufspaltung des Winkelspektrums zu minimieren, die Außenflächen dieser Doppelkeilstruktur liegen dann parallel zueinander, so dass alle weiteren Grenzflächen des Schichtbundes einschließlich der Auflagefläche parallel zueinander liegen.

Während bei den vorangegangenen Beispielen die transparenten Bereiche hell und die reflektierenden Bereiche dunkel dargestellt waren, können die Spiegelstrukturen auch invers ausgearbeitet sein, d.h. die dunklen Bereiche, die vorhergehend als reflektierend beschrieben wurden, sind dann transparent und umgekehrt. In diesen Fällen erfolgt die Beleuchtung von der gegenüberliegenden Seite, damit der Transmissionsgrad der Spiegelschicht 105 mit zunehmender Entfernung von der Lichtquelle größer wird und der Reflexionsgrad kleiner, d.h. die Lichtquelle 112 und die Einkoppelfläche würden dann bei den in inverser Weise zu den in Fig. 2a-d, 2f ausgebildeten Spiegelschichten 105 auf der rechten Seite der gezeigten Spiegelschichten 105 angeordnet.

Alternativ oder in Ergänzung zu den vorangehend beschriebenen Beispielen kann auch die Dichte eines Materials, welches wesentlich die Reflexion an der Spiegelschicht 105 verursacht, d.h. eines Bestandteils der Spiegelschicht 105 mit zunehmender Entfernung von der Lichtquelle abnehmen.

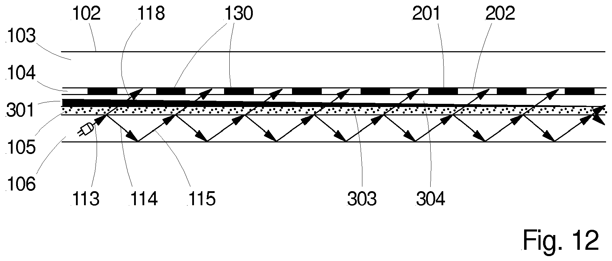

In der in Fig. 12 dargestellten bevorzugten Ausführungsform wird das Homogenisierungsmittel anstatt an der Spiegelschicht 105 mittels einer gesonderte Schicht für diesen Zweck realisiert, beispielsweise durch einen Absorber 301 mit einer Absorptionsschicht 303, welcher zwischen der Spiegelschicht 105 und der Sensorschicht 104 angeordnet ist, wobei mit zunehmender Entfernung von der Lichtquelle 112 der Absorptionsgrad der Absorptionsschicht 303 für das Beleuchtungslicht abnimmt und der Transmissionsgrad zunimmt. Dies ist in Fig. 12 beispielhaft mit einer keilförmig ausgebildeten Absorptionsschicht 303 dargestellt, zur Wahrung der parallelen Lage der Grenzflächen ist die Absorptionsschicht 303 mit einer transparenten Ausgleichsschicht 304 optisch gekoppelt, beide zusammen bilden den Absorber 301.

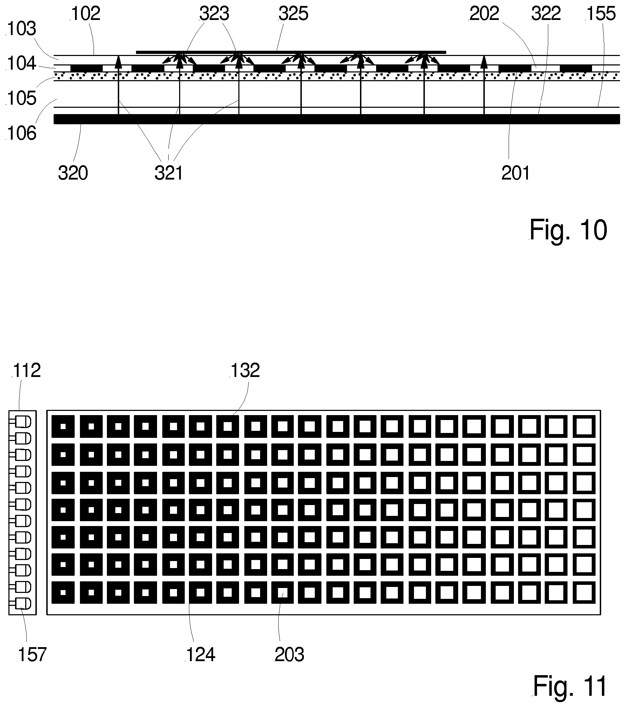

Fig. 11 schließlich zeigt eine Ausgestaltung, bei der die Vorrichtung Mittel zur Homogenisierung der zu detektierenden Lichtmenge umfasst; diese Mittel umfassen eine Pixelaperturblendenschicht 124, die über der Sensorschicht 104 angeordnet sein kann, mit einzelnen Pixelaperturblenden 132, die in Fig. 11 stark vergrößert dargestellt sind. Die Blendenöffnungen 203 der Pixelaperturblenden 132 nehmen mit zunehmender Entfernung von der Lichtquelle 112 zu, d.h. je größer die Entfernung von der Lichtquelle 112 ist, desto mehr Licht kann detektiert werden. In Ergänzung oder alternativ können die Mittel zur Homogenisierung der zu detektierenden Lichtmenge auch eine Ansteuerung zur Variation der Lichtempfindlichkeit der Sensorelemente 201 umfassen; in diesem Fall können die Blendenöffnungen 203 auch alle identisch sein.

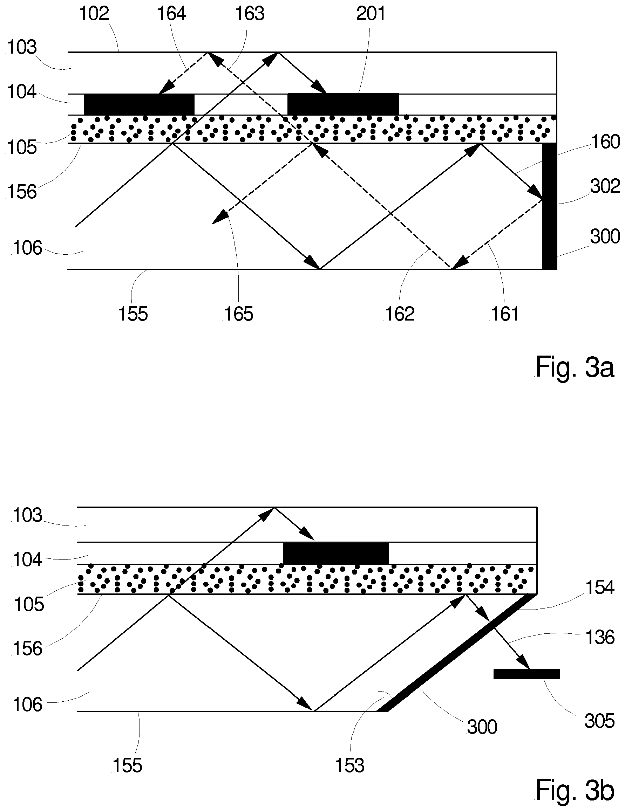

An einer als Abschlussschmalseite 300 ausgebildeten Schmalseite des Lichtleiters 106, welche der Einkoppelfläche in Lichtausbreitungsausrichtung gegenüberliegt, sind bevorzugt Mittel zur Unterdrückung der Ausbildung rücklaufender Strahlen ausgebildet. Die Fig. 3a - 3e zeigen verschiedene Ausgestaltungen dieser Unterdrückungsmittel. In diesen Figuren ist jeweils die der Lichtquelle abgewandte Seite des Aufbaus mit der Abschlussschmalseite 300 gezeigt. Der durch den Lichtleiter 106 propagierte Anteil des Lichts trifft als Lichtstrahl 160 am Ende auf die Abschlussschmalseite 300 des Lichtleiters 106. Ohne weitere Maßnahmen wird das Licht - hier in Form des Lichtstrahls 160 beispielhaft dargestellt - reflektiert und propagiert durch den Lichtleiter 106 wieder zurück, mit einem Winkel, welcher abhängig von der Neigung der Abschlussschmalseite 300 in Bezug auf die obere Großseite 156 ist. Der rückreflektierte Lichtstrahl 161 wird, wenn die Abschlussschmalseite 300 mit der oberen Großseite 156 einen rechten Winkel einschließt, an der unteren Großseite 155 totalreflektiert und läuft als abermals reflektierter Lichtstrahl 162 weiter. Da die Spiegelschicht 105 einen Bruchteil des Lichts durchlässt, tritt auch ein Bruchteil des rücklaufenden Lichtstrahls 163 durch die Spiegelschicht 105, die Sensorschicht 104 und den Schutzkörper 103 hindurch und trifft auf die Auflagefläche 102. Wenn dort kein Objekt aufliegt, wird er - hier sei auf die Beschreibung zu Fig. 1 verwiesen - an der Auflagefläche 102 totalreflektiert und trifft als Lichtstrahl 164 auf ein lichtempfindliches Sensorelement 201; andernfalls tritt er in das aufliegende Objekt ein und wird dort gestreut. Der Strahlverlauf des rücklaufenden Lichtstrahls ist durch gestrichelte Linien gekennzeichnet, der des einlaufenden Lichtstrahls mit durchgezogenen Linien, sie entsprechen den im Zusammenhang mit Fig. 1 beschriebenen Lichtstrahlen. Sowohl von den einlaufenden als auch von den rücklaufenden Strahlen werden Abbilder der Objekttextur auf die Sensorschicht 104 mit den einzelnen Sensorelementen 201 projiziert, die hier um den Abstand zweier Pixel zueinander verschoben sind. Unter der in Fig. 3a gezeigten Voraussetzung, dass die Abschlussschmalseite 300 senkrecht zur oberen Großseite 156 angeordnet ist, entstehen zwei Bilder, wobei das Bild des rücklaufenden Strahls um Δz = -d·tan(α) in Richtung der Lichtquelle 112 verschoben ist. Dabei ist d wieder die Dicke der Schutzschicht und α der Winkel des reflektierten Strahls zur Flächennormale der Auflagefläche 102. Ohne weitere Maßnahmen entsteht durch vorlaufenden und rücklaufenden Strahl somit ein Doppelbild, die beiden einzelnen Bilder sind um den Betrag von 2Δz verschoben.

Durch die im Folgenden beschriebenen Maßnahmen werden die rücklaufenden Strahlen unterdrückt. Eine einfache Maßnahme ist es, die Abschlussschmalseite 300 mit einer Absorptionsschicht 302 zu versehen, in Fig. 3a durch den dicken schwarzen Balken dargestellt. Diese verhindert eine Reflexion an der Abschlussschmalseite 300 und verhindert zudem, dass Strahlung zurück propagieren kann. Eine weitere Ausführung der Unterdrückungsmittel ist in Fig. 3b dargestellt. Hier ist die Abschlussschmalseite 300 so geneigt, dass die auftreffenden Strahlen vorzugsweise rechtwinklig auftreffen, im Wesentlichen also ist die Abschlussschmalseite 300 zur Ausbreitungsrichtung von entlang der Vorzugsrichtung 113 in den Lichtleiter 106 eingetretenem Licht senkrecht angeordnet, um eine möglichst geringe Reflexion zu erreichen. Zusätzlich ist die Abschlussschmalseite 300 hier mit einer Antireflexionsschicht 154 zur Entspiegelung versehen, um die Reflexion zu minimieren. Transmittierte Lichtstrahlen 136 werden von einem zusätzlichen Absorber 305 aufgefangen.

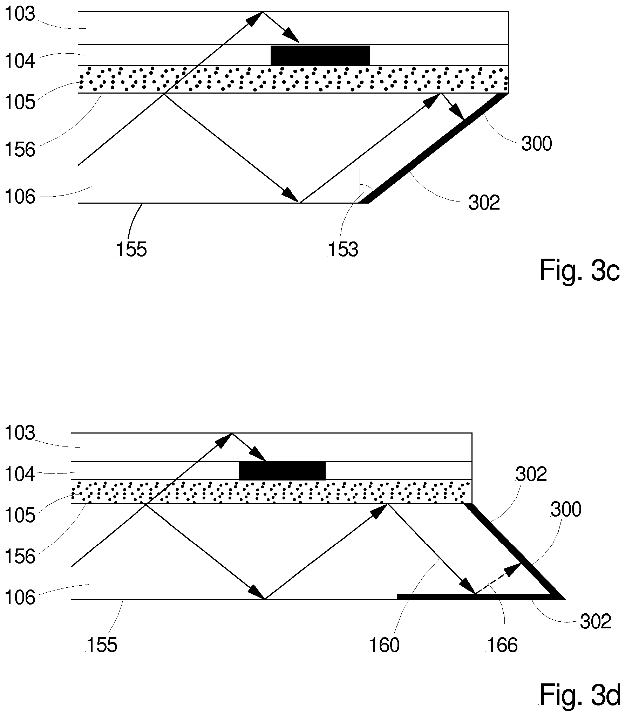

Fig. 3c zeigt eine Abwandlung von Fig. 3b, auch hier ist die Abschlussschmalseite 300 in Bezug auf die untere Großseite 155 um einen zum rechten Winkel zusätzlichen Neigungswinkel 153 geneigt, die Abschlussschmalseite 300 ist hier selbst mit einer Absorptionsschicht 302 versehen. Die Absorptionsschicht 302 kann beispielsweise durch Schwärzung der Flächen, durch Aufrauen oder durch Kombination beider oder durch weitere, im Stand der Technik bekannte Maßnahmen, realisiert werden.

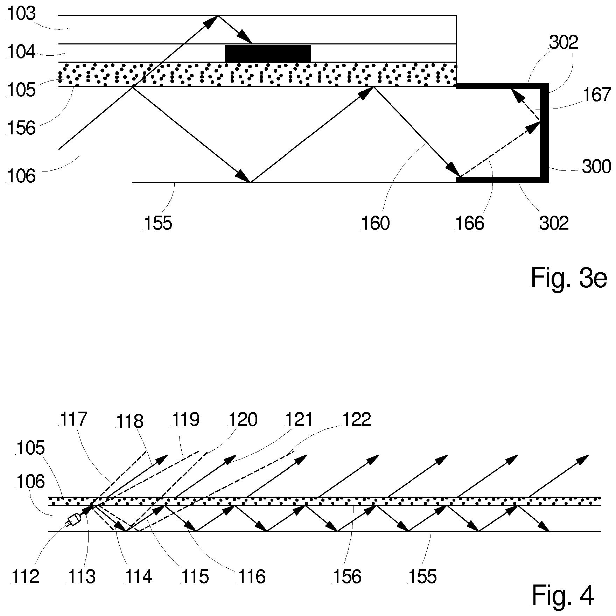

Weitere Ausgestaltungen sind in den Fig. 3d und 3e gezeigt, die Abschlussschmalseite 300 ist hier aus zwei bzw. drei einzelnen Flächen zusammengesetzt, die jeweils paarweise miteinander von 0° und 180° verschiedene Winkel einschließen, wobei die Winkel in Abhängigkeit von der Ausbreitungsrichtung des Lichts derart vorgegeben sind, dass die Absorption maximiert wird. Im Bereich der Abschlussschmalseite 300 ist die untere Großseite 155 gegenüber der oberen Großseite 156 verlängert und schließt mit der Abschlussschmalseite 300 einen entsprechenden Winkel ein, der so gewählt ist, dass reflektiertes Licht dort möglichst senkrecht auf die Abschlussschmalseite 300 trifft. Der Bereich der Abschlussschmalseite 300 besteht hier aus mehreren Absorptionsflächen, die in verschiedenen Winkeln aneinander stoßen. In Fig. 3d ist der Endbereich der unteren Großseite 155 ebenfalls mit einer Absorptionsschicht 302 versehen, nicht absorbiertes Licht trifft möglichst senkrecht auf die Abschlussschmalseite 300 und wird dort von einer weiteren Absorptionsschicht 302 absorbiert, der Grad der Absorption kann auf diese Weise erhöht werden. Fig. 3e schließlich zeigt eine Variante, bei der der Lichtleiter 106 über den Bereich der Sensorschicht 104, der Spiegelschicht 105 und des Schutzkörpers 103 in Richtung des von der Lichtquelle 112 abgestrahlten Lichts hinausreicht und die Endbereiche der unteren Großseite 155 und der oberen Großseite 156 ebenso wie die Abschlussschmalseite 300 jeweils mit einer Absorptionsschicht 302 versehen sind. Die von der ersten Absorptionsschicht 302 an der unteren Großseite 155 nicht absorbierten Anteile der Lichtstrahlen 166 werden auf die Abschlussschmalseite 300 gelenkt und die dort nicht absorbierten Anteile der Lichtstrahlen 167 auf die an der oberen Großseite 156 ausgebildete Absorptionsschicht 302. Auf diese Weise ist es mit einfachen technischen Mitteln möglich, eine dreifache Absorption zu erreichen, so dass ein hoher Grad der Absorption realisiert werden kann. Bei der in Fig. 3e gewählten Darstellung schließt der Lichtleiter 106 nicht bündig mit den drei anderen Schichten des Schutzkörpers 103, der Sensorschicht 104 und der Spiegelschicht 105 ab, ein bündiger Abschluss ist jedoch ohne weiteres möglich, wenn beispielsweise das Endstück der oberen Großseite 156 mit einer Absorptionsschicht versehen wird, beispielsweise durch entsprechende Aufrauhung, bevor der Lichtleiter 106 mit der Spiegelschicht 105 optisch gekoppelt wird.

Anhand von Fig. 4 wird nun die Strahlausbreitung im Lichtleiter 106 näher erläutert. Licht wird von der Lichtquelle 112 entlang der Vorzugsrichtung 113 in den Lichtleiter 106 abgestrahlt, wobei technisch bedingt Licht auch in einem Winkelbereich um die Vorzugsrichtung 113 abgestrahlt wird, dessen Randstrahlen 117 und 119 hier durch die gestrichelten Linien für den Einfallswinkelbereich direkt nach Austritt aus der Lichtquelle 112 dargestellt sind. Ein Teil des entlang der Vorzugsrichtung 113 abgestrahlten Lichts wird durch die Spiegelschicht 105 transmittiert und läuft dort als Zentralstrahl 118 weiter, gleiches trifft für die Randstahlen 117 und 119 zu. Der größere Teil des Lichtes wird jedoch reflektiert und läuft als reflektierter Strahl 114 weiter. Nach einer Reflexion an der unteren Großseite 155 läuft er als reflektierter Strahl 115 weiter, ein kleinerer Anteil tritt durch die Spiegelschicht 105 als Zentralstrahl 121 hindurch, während der größere Anteil als reflektierter Strahl 116 im Lichtleiter verbleibt. Gleichermaßen werden auch die Randstrahlen reflektiert, wobei jedoch entsprechend der Länge des Lichtweges der Durchmesser des Öffnungswinkelbereichs, der beispielsweise Kegelform haben kann, immer größer wird, wie beispielsweise an den Randstrahlen 120 und 122 erkennbar ist. Dies führt abhängig von der Dicke des Lichtleiters, dem verwendeten Einfallswinkel und der Größe des Winkelbereichs bei größer werdendem Abstand von der Lichtquelle 112 zu einer Überlagerung der durch die Spiegelschicht 105 transmittierten anteiligen Lichtbündel, auf diese Weise wird eine homogene Ausleuchtung der Auflagefläche 102 erreicht, unabhängig von einer Homogenisierung der Beleuchtungsstärke. Für die homogene Ausleuchtung des für die Bildaufnahme vorgesehenen Bereichs der Auflagefläche 102 sollte deshalb eine Laufstrecke des Lichtes durch den Lichtleiter 106 vor den ersten lichtempfindlichen Sensorelementen 201 vorgesehen werden, die abhängig von der Dicke des Lichtleiters, des Einfallswinkels und des Winkelbereichs des von der Lichtquelle 112 abgestrahlten Lichtes so angepasst ist, dass möglichst schon im Bereich dieses ersten Sensorelements 201 die Ausleuchtung homogen ist. Der Winkelbereich des von der Lichtquelle 112 abgestrahlten Lichtbündels bestimmt mit der Dicke und der Brechzahl des Schutzkörpers 103 das Auflösungsvermögens des Systems und ist vorzugsweise kleiner als ±10° um die Vorzugsrichtung 113 in der in Fig. 4 gezeigten Blattebene, d.h. in einer Ebene senkrecht zur Auflagefläche 102. In der Ebene parallel zur Auflagefläche hingegen ist eine möglichst weite Auffächerung des Lichtstrahls vorteilhaft.

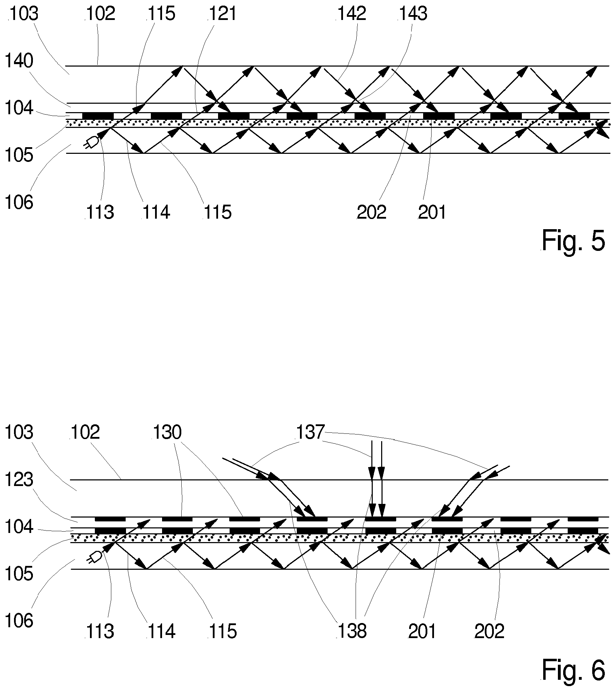

Der Schutzkörper 103 kann beispielsweise mittels Abscheideprozessen auf die Sensorschicht 104 aufgebracht werden. Im Vergleich zu bekannten Anordnungen lassen sich jedoch dickere Schutzkörper 103 verwenden, diese können auch mittels eines - hinsichtlich der Transparenz für Beleuchtungslicht und der Brechzahl - angepassten Adhäsionsmittels mit der Sensorschicht 104 optisch gekoppelt werden, durch sogenanntes optisches Bonden. Ein solches Beispiel ist in Fig. 5 gezeigt, hier befindet sich zwischen Sensorschicht 104 und Schutzkörper 103 eine Adhäsionsmittelschicht 140, die hier zur Verdeutlichung mit einer höheren Dicke als in der Realität dargestellt ist. Durch die Verwendung einer Adhäsionsmittelschicht 140 ergeben sich weitere technologischen Möglichkeiten, Schutzkörper mit größeren Dicken und größerer Härte aufzubringen, als in Abscheideprozessen erzeugt werden können, vorzugsweise mit Dicken zwischen 50 µm und 1000 µm. Der Schutzkörper 103 ist dann vorzugsweise aus hartem Dünnglas, gehärtetem Glas oder Keramik. Selbstverständlich muss der Schutzkörper für Beleuchtungslicht transparent sein, es ist aber auch möglich, den Schutzkörper selbst als Spektralfilter auszubilden, so dass dieser beispielsweise Umgebungslicht abblockt. Der Schutzkörper 103 kann gesondert hergestellt werden und vor dem Aufbringen auf den Sensor bearbeitet werden, um ihn noch besser an den Verwendungszweck anzupassen. Beispielsweise kann der Schutzkörper 103 gehärtet werden, mit elektrisch oder optisch wirksamen Beschichtungen versehen werden, auch ästhetische Bearbeitungen sind denkbar. Das für die Adhäsionsmittelschicht 140 verwendete Adhäsionsmittel ist mindestens teiltransparent und kann selbst oder durch Einbringen von optisch wirksamen Additiven spektral beschränkend wirken. Um Reflexionen an der Kontaktfläche zu vermeiden, wird die Brechzahl des Adhäsionsmittels an diejenige des Schutzkörpers 103 angepasst. Durch die letztgenannte Maßnahme der spektralen Filterung wird das von den Sensorelementen 201 registrierbare Licht in seinem Wellenlängenspektrum beschränkt, die Empfindlichkeit des Sensorelements 201 bezüglich Umgebungs- und Störlicht kann auf diese Weise verringert werden, die Bildqualität wird dadurch erhöht, insbesondere, wenn dadurch ein Übersteuern von einigen oder allen Sensorelementen vermieden werden kann.

Fig. 5 zeigt außerdem den Strahlverlauf des Zentralstrahls unter Berücksichtigung geringer Brechzahländerungen an der Grenzfläche zwischen der Adhäsionsmittelschicht 140 und dem Schutzkörper 103. Der Zentralstrahl 121 trifft auf die Unterseite der Auflagefläche 102 und wird dann, falls darüber keine Hautbereiche angeordnet sind, abermals total reflektiert und tritt als Lichtstrahl 142 in die Adhäsionsmittelschicht 140 ein und trifft anschließend als Lichtstrahl 143 auf das Sensorelement 201.

Eine weitere Ausgestaltung der Vorrichtung zeigt Fig. 6, wobei auf die Darstellung der gesonderten Adhäsionsmittelschicht 140 verzichtet wurde. Zur Unterdrückung der Detektion von Umgebungslicht ist hier zwischen der Sensorschicht 104 und dem Schutzkörper 103 eine zusätzliche Umgebungslichtblendenschicht 123 angeordnet, wobei jeweils eine Umgebungslichtblende 130 über einem Sensorelement 201 angeordnet ist. In den Bereichen außerhalb der Umgebungslichtblenden 130 ist die Umgebungslichtblendenschicht 123 transparent ausgestaltet. Lichtstrahlen von Umgebungslicht 137 werden an der Aufnahmefläche 102 gebrochen und propagieren als gebrochene Lichtstrahlen 138 in Richtung der Sensorelemente 201. Die Umgebungslichtblenden 130 können als einfache, vollständig ausgefüllte absorbierende Bereiche ausgestaltet sein, auf diese Weise wird das Auftreffen von den Lichtstrahlen 138 des gebrochenen Umgebungslichts auf die lichtempfindlichen Sensorelemente 201 und damit das Auftreten von Bildstörungen verhindert. Die Blenden können aber auch gleichzeitig, wie im Zusammenhang mit Fig. 11 beschrieben, die Funktion der Homogenisierung übernehmen und verschieden große transparente Bereiche in Abhängigkeit von der Entfernung zur Lichtquelle 112 aufweisen.

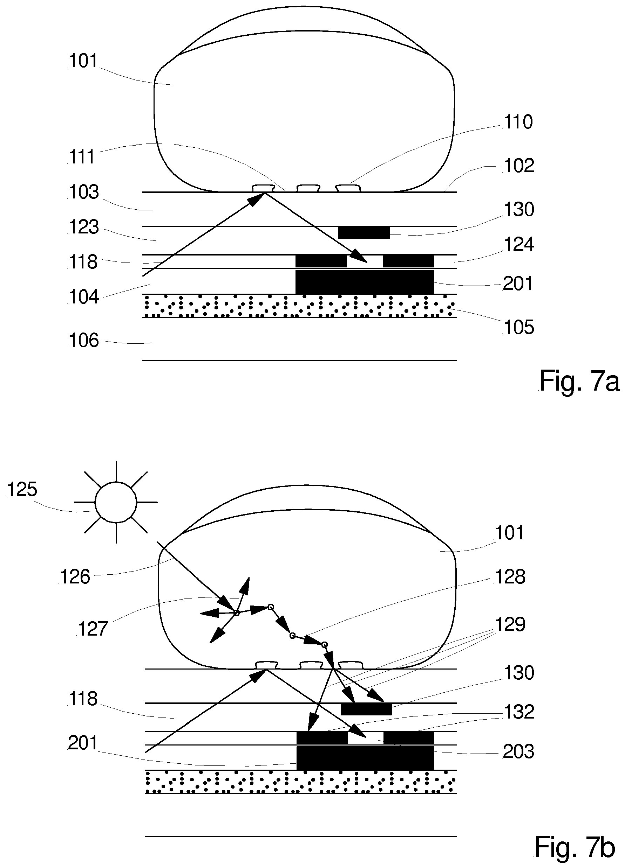

Noch besser lassen sich beide Aspekte, die Absorption von Umgebungslicht und die Homogenisierung der zu detektierenden Lichtmenge realisieren, wenn die im Zusammenhang mit Fig. 11 beschriebenen Blendenschicht 124 mit Pixelaperturblenden und darüber die gesonderte Umgebungslichtblendenschicht 123 mit Umgebungslichtblenden 130 zur Blockung von Umgebungslicht im Schichtsystem angeordnet ist. Dies ist in den Fig. 7a und 7b dargestellt. Fig. 7a zeigt einen solchen Aufbau mit aufliegendem Finger 101 und Blendenschichten 123 und 124 mit Pixelaperturblenden 132 zur Homogenisierung der zu detektierenden Lichtmenge in der Blendenschicht 124 und Umgebungslichtblenden 130 in der Umgebungslichtblendenschicht 123 zur selektiven Winkelbeschränkung im Zusammenspiel mit der darunter angeordneten Blendenschicht 124, welche die Apertur der Sensorelemente 201 steuert. Bei der Homogenisierung der zu detektierenden Lichtmenge handelt es sich dabei nur um eine Option, diese kann auch durch eine entsprechende Ausgestaltung der Spiegelschicht 105, wie vorangehend beschrieben, erreicht werden, d.h. es ist ebenfalls möglich, dass alle Pixelaperturblenden 132 die gleiche Öffnung aufweisen, so dass die Bedingungen für die Blockung von Umgebungslicht für alle Sensorelemente 201 identisch sind.

Fig. 7a zeigt den Strahlverlauf bei aufliegendem Finger 101, wobei der Zentralstrahl 118 in einem Bereich auf die Auflagefläche 102 trifft, über dem sich ein Papillartal 110 des Fingers 101 befindet, so dass der Zentralstrahl 118 total reflektiert wird und sowohl durch die Umgebungslichtblende 130 als auch durch die Pixelaperturblende 132 durch die Blendenöffnung 203 auf das lichtempfindliche Sensorelement 201 trifft. Die Situation für Licht aus der Umgebung ist in Fig. 7b zusätzlich dargestellt. Licht einer externen Lichtquelle 125 tritt beispielhaft als Lichtstrahl 126 in den Finger 101 ein und wird dort in Streustrahlen 127 und 128 gestreut. Nach mehrfacher Streuung tritt ein Teil des Lichts über eine Papillarleiste 111 und die Aufnahmefläche 102 in den Schutzkörper 103 als Lichtstrahl 129 ein, wobei die Einstrahlrichtung stochastisch ist. Es ergeben sich daher mehrere mögliche Richtungen, die das Umgebungslicht als Lichtstrahl 129 nehmen kann. Da die Lichtstrahlen 129 der Störstrahlung vorwiegend Winkel aufweisen, die nicht durch den Spalt zwischen dem absorbierenden Bereich der Umgebungslichtblende 130 und der Pixelaperturblende 132 propagieren können, kann durch die Störstrahlung die Bildaufnahme nicht gestört werden, der Kontrast wird nicht verringert.

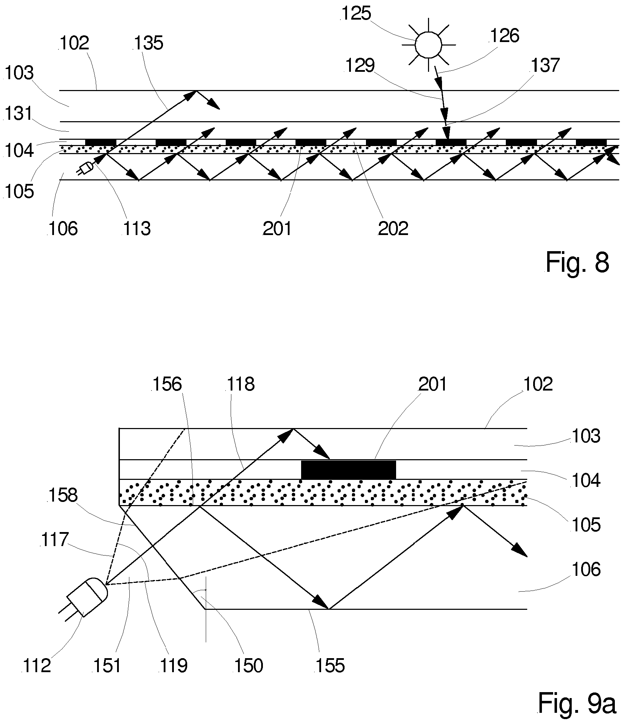

Fig. 8 zeigt eine weitere Ausgestaltung der Vorrichtung mit einer Spektralfilterschicht 131 zwischen der Sensorschicht 104 und dem Schutzkörper 103, diese Ausführung kann selbstverständlich mit den anderen Ausführungen kombiniert werden, so wie auch alle anderen Ausführungen untereinander kombiniert werden können. Ziel der Spektralfilterschicht 131 ist es, die spektrale Bandbreite des zu den lichtempfindlichen Sensorelementen 201 gelangenden Lichtes zu beschränken. Die Spektralfilterschicht 131 kann als gleichmäßige Fläche ausgebildet sein oder so strukturiert werden, dass im Minimum über den lichtempfindlichen Sensorelementen 201 der Sensorschicht 104 ein Filter ausgebildet wird, d.h. ihre spektrale Selektivität kann über die Fläche variieren, was insbesondere für den Fall von Vorteil ist, wenn Licht einer Zusatzlichtquelle verwendet wird, wie es weiter unten im Zusammenhang mit Fig. 10 beschrieben wird. Die Spektralfilterschicht 131 kann beispielsweise vor dem Aufbringen des Schutzkörpers 103 auf die Sensorschicht 104 aufgebracht werden, oder aber auf den Schutzkörper 103 aufgebracht werden. Die Spektralfilterschicht 131 ist vorzugsweise nur für solche Wellenlängen bzw. Wellenlängenbereiche durchlässig, die das aufliegende Objekt nicht durchdringen können. Je schmaler das Transmissionsband der Spektralfilterschicht 131 ist, desto besser ist die Abschirmung des Aufbaus gegen Störlicht. Selbstverständlich ist es auch möglich, mehrere Spektralfilterschichten zu kombinieren oder die Spektralfilterschicht so zu gestalten, dass sie für mehrere Wellenlängenbereiche selektiv ist.

Um das Licht der Lichtquelle 112 möglichst effektiv mit hoher Ausbeute in den Lichtleiter 106 einzukoppeln, ist es vorteilhaft, die Einkoppelfläche entsprechend auszubilden, indem beispielsweise die Normale der Einkoppelfläche parallel zur Vorzugsrichtung 113 liegt. Beispiele für besonders geeignete Einkoppelflächen sind in Fig. 9a - 9c dargestellt. Fig. 9a zeigt eine um einen Winkel 150 zur Flächennormalen der Spiegelschicht 105 bzw. zur oberen Großseite 156 geneigte Einkoppelfläche 158, der Winkel 150 weist vorzugsweise einen Betrag zwischen 10° und 50° auf. Die Lichtquelle 112 ist in einem entsprechenden Winkel ausgerichtet, so dass vorzugsweise mindestens der Zentralstrahl 118 senkrecht auf die Einkoppelfläche 158 trifft und die obere Großseite 156 - bei der Annahme eines äußeren Mediums mit dem Brechungsindex von Luft anstelle der Spiegelschicht 105 - unter einem für die Totalreflexion erforderlichen Winkel trifft. Der Winkelbereich, in welchem die Lichtquelle 112 Licht abstrahlt, wird durch die gestrichelt gezeichneten Randstrahlen 117 und 119 symbolisiert. Während der Zentralstrahl 118 die Auflagefläche 102 unter einem Winkel trifft, der für die Totalreflexion ausreichend ist, wird der in Fig. 9a gezeigte Randstrahl 117 an der Auflagefläche 102 nicht totalreflektiert, der Randstrahl 119 hingegen wird totalreflektiert. Teile des Lichtbündels mit Winkeln zwischen dem Randstrahl 117 und dem Zentralstrahl 118 werden also nicht totalreflektiert, der Öffnungswinkel des im Lichtleiter 106 propagierenden Lichtbündels wird auf diese Weise effektiv beschränkt, auch wenn die Lichtquelle an sich einen größeren Öffnungswinkel für die Lichtabstrahlung vorsieht. Bei Lichtquellen, welche Licht in größeren Winkelbereichen abstrahlen, führt dies zu einer Verbesserung der Auflösung des Systems, allerdings auch zu Verlusten in der Intensität.

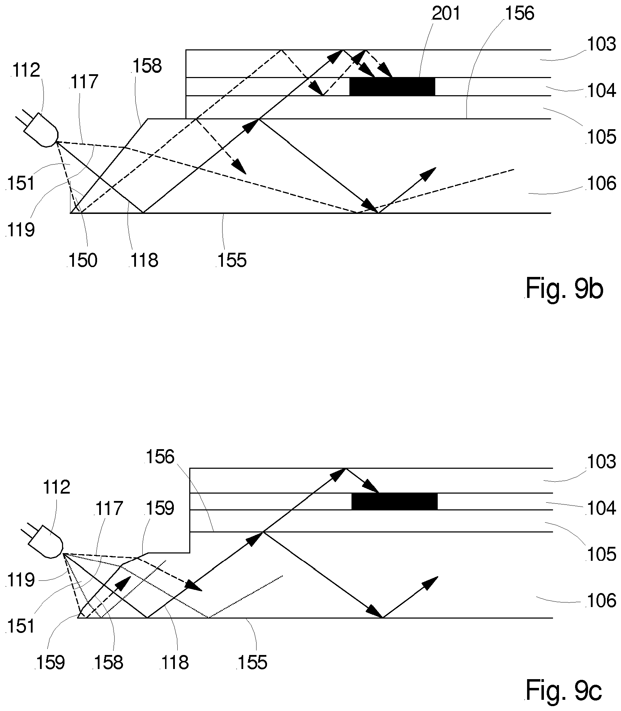

Fig. 9b zeigt eine zur Fig. 9a analoge Situation, bei der der Winkel 150 den gleichen Betrag, jedoch ein anderes Vorzeichen als in Fig. 9a aufweist, sowie den entsprechenden Strahlverlauf für den Zentralstrahl 118 und die Randstrahlen 117 und 119. Die Lichtquelle 112 strahlt in einem Winkelbereich 151 Licht in der Blattebene ab, d.h. in einer Ebene senkrecht zur Auflagefläche 102.

Eine Abwandlung der in Fig. 9b gezeigten Ausgestaltung zeigt Fig. 9c. Die Einkoppelfläche 158 ist hier an ihren Rändern mit Fasen 159 versehen, was eine effektivere Nutzung des von der Lichtquelle 112 abgestrahlten Lichts ermöglicht. Während die Normale der Einkoppelfläche 158 mit der Vorzugsrichtung 113 bzw. dem Zentralstrahl 118 parallel liegt, schließen die Fasen 159 mit der Einkoppelfläche 158 einen von 0° bzw. 180° verschiedenen Winkel ein. Dadurch wird erreicht, dass die Randstrahlen 117 und 119 beim Eintritt in den Lichtleiter 106 stärker gebrochen werden und damit der effektive Winkelbereich des Beleuchtungslichts reduziert wird. Das führt zu einer Verbesserung der Auflösung des gesamten Systems. Selbstverständlich ist es auch möglich, die Einkoppelfläche 158 zusätzlich in weitere, zueinander jeweils gekippte Teilabschnitte aufzuteilen. Auch eine Aufteilung in infinitesimal kleine Flächenabschnitte ist möglich, beispielsweise kann die Einkoppelfläche 158 auch eine Krümmung aufweisen.

Außerdem besteht auch die Möglichkeit, den Winkelbereich 151 zu reduzieren, in dem Blenden in Form breiter Schlitze an der Einkoppelfläche 158 angebracht werden, auch kann der Abstand der Lichtquelle 112 zur Einkoppelfläche 158 vergrößert werden, jedoch sind diese Maßnahmen mit einem Verlust an eingestrahlter Intensität verbunden, was insbesondere bei mobilen Geräten einen unnötigen Energieverlust und kürzere Akkulaufzeiten hervorruft.

Fig. 10 schließlich zeigt eine Vorrichtung, bei der unterhalb der unteren Großseite 155 des Lichtleiters 106 eine flächenförmig Licht abstrahlende Zusatzlichtquelle 320 angeordnet ist, welche von der unteren Großseite 155 des Lichtleiters 106 durch eine Luftschicht 322 beabstandet ist. Die Beleuchtungsstärke der Zusatzlichtquelle 320 kann an den Transmissionsgrad der Mittel zur Homogenisierung angepasst sein und örtlich variieren. Sie kann darüber hinaus vorteilhaft Licht mindestens zweier, einander bevorzugt nicht überlappender Wellenlängenbereiche abstrahlen.

Eine der mehreren Wellenlängenbereiche ist dabei vorteilhaft dem für das menschliche Auge sichtbaren Wellenlängenbereich benachbart, was die Echtheitsprüfung von Dokumenten zulässt, vorteilhaft ist auch eine farbige Beleuchtung, wofür die Zusatzlichtquelle 320 bevorzugt Licht aus einem roten, einem blauen und einem grünen Wellenlängenbereich abstrahlend ausgestaltet ist. Die Wellenlängenbereiche können zuschaltbar sein. Die Zusatzlichtquelle 320 dient der Aufnahme von anderen Objekten als Hautbereichen, beispielsweise von flachen Dokumenten 325. Damit lassen sich auch Objekte aufnehmen, welche die Totalreflexion des von der Lichtquelle 112 abgestrahlten Lichts nicht stören und damit auf den Sensorelementen 201 bzw. der Sensorschicht 104 kein Bild ihrer Textur erzeugen können, sie dient auch der Aufnahme von Objekten, die aufgrund ihrer Oberflächenstruktur Doppelbilder bei der Beleuchtung mit der Lichtquelle 112 auf der Sensorschicht 104 erzeugen. Um Bilder mit der Zusatzlichtquelle 320 aufzunehmen, wird die Lichtquelle 112 vorzugsweise ausgeschaltet. Von der Zusatzlichtquelle ausgestrahlte Lichtstrahlen 321 durchdringen den Lichtleiter 106, die Spiegelschicht 105, die Durchlassbereiche 202 der Sensorschicht 104 und den Schutzkörper 103, bevor sie auch die Auflagefläche 102 durchtreten. Beim Auftreffen auf das auf der Auflagefläche 102 aufliegende Objekt, hier beispielhaft das Dokument 325, werden die Lichtstrahlen 321 als Streulicht 323 zurückgestreut, welches auf die lichtempfindlichen Sensorelemente 201 trifft. Die maximale Auflösung bei diesem Abbildungsvorgang ist geringer als bei der Fingerabdruckaufnahme mittels gerichteter Beleuchtung durch den Lichtleiter und hängt von der Dicke des Schutzkörpers ab. Je dicker der Schutzkörper ist, also je größer der Abstand zwischen den lichtempfindlichen Sensorelementen und dem aufzunehmenden Objekt ist, desto geringer ist die Auflösung des Systems. Um 300 ppi auflösen zu können, darf dieser Abstand einen vorgegebenen Wert nicht überschreiten. Verwendet man als Schutzkörper beispielsweise ein Dünnglas mit einem Brechungsindex von 1,5, so darf der Abstand nicht größer sein als etwa 50 µm. Die maximale Auflösung hängt im Allgemeinen von dem Brechungsindex des Schutzkörpers ab. Je größer dieser Brechungsindex ist, desto größer ist die maximale Auflösung. Die Helligkeit der Zusatzlichtquelle 320 ist dabei zweckmäßig auf die Transmission der korrespondierenden Bereiche der Spiegelschicht 105 abgestimmt, so dass auf der Auflagefläche 102 eine gleichmäßige Ausleuchtung erreicht wird. Vorteilhaft strahlt die Zusatzlichtquelle weißes Licht für die monochrome Aufnahme eines Objekts aus. Für die Prüfung der Echtheit von Dokumenten ist es vorteilhaft, wenn die Zusatzlichtquelle 320 außerdem auch Licht in einem weiteren spektral eingeschränkten Wellenlängenbereich durch Umschaltung aussenden kann, beispielsweise in einem, dem sichtbaren Wellenlängenbereich benachbarten, Infrarot- oder Ultraviolett-Bereich.

Ergänzend oder alternativ kann die Zusatzlichtquelle 320 Licht auch in den eingeschränkten Wellenlängenbereichen für rotes, grünes und blaues Licht sequentiell oder gleichzeitig abstrahlen. Mit der sequentiellen Beleuchtung lässt sich ein Bild in den drei Farben nacheinander aufnehmen und durch entsprechende Bildbearbeitungsalgorithmen, wie sie im Stand der Technik bekannt sind, zu einem Farbbild zusammensetzen, wenn die Sensorelemente 201 nur die Intensität registrieren. Die Beleuchtung mit den verschiedenen Wellenlängenbereichen kann auch gleichzeitig erfolgen, wobei es dann notwendig ist, dass die Sensorelemente 201 mit entsprechenden Subpixeln ausgestaltet sind, die jeweils nur diesen Wellenlängenbereich detektieren, und/oder mit verschiedenen Farbfiltern ausgestaltet sind, so dass die verschiedenen Subpixel jeweils verschiedene Wellenlängenbereiche detektieren können.

Die Zusatzlichtquelle 320 lässt sich außerdem auch dazu verwenden, auf der Auflagefläche Informationen anzuzeigen, die einem Nutzer Hinweise über die Nutzung der Anordnung nach Art eine Bedienungsanleitung oder zusätzliche Informationen zeigen. Dazu muss die Zusatzlichtquelle 320 allerdings aus einzeln ansteuerbaren Elementen bestehen, z.B. als Display ausgeführt.

Mit der vorangehend beschriebenen Vorrichtung ist es möglich, die Abdrücke mehrerer Finger gleichzeitig bei durch die Homogenisierung gleicher Aufnahmequalität für alle Hautbereiche aufzunehmen, wobei der Aufbau der Vorrichtung verglichen mit anderen auf Totalreflexion basierenden Anordnung zur Aufnahme von Autopodien flach aufgebaut ist. Zusätzlich lassen sich auf der Auflagefläche, die auch als Bildschirm benutzt werden kann, Informationen wie beispielsweise eine Benutzerführung oder einer Auswertung darstellen, es können mittels der Zusatzlichtquelle auch Dokumente aufgenommen und auf Echtheit überprüft werden, beispielsweise mit Hilfe eines Vergleichs anhand angeschlossener Datenbanken.

### Bezugszeichenliste

- 101: Finger
- 102: Aufnahmefläche / Auflagefläche
- 103: Schutzkörper
- 104: Sensorschicht
- 105: Spiegelschicht
- 106: Lichtleiter
- 107: transmittierter Strahl
- 108: reflektierter Strahl
- 109: Streuzentrum
- 110: Papillartal
- 111: Papillarleiste
- 112: Lichtquelle
- 113: Vorzugsrichtung
- 114, 115, 116: reflektierter Strahl
- 117: Randstrahl
- 118: Zentralstrahl
- 119, 120: Randstrahl
- 121: Zentralstrahl
- 122: Randstrahl
- 123: Umgebungslichtblendenschicht
- 124: Blendenschicht
- 125: externe Lichtquelle
- 126: Lichtstrahl
- 127, 128: Streustrahl
- 129: Lichtstrahl
- 130: Umgebungslichtblende
- 131: Spektralfilterschicht
- 132: Pixelaperturblende

- 135: Lichtstrahl
- 136: Lichtstrahl
- 137: Umgebungslicht
- 138: Lichtstrahl

- 140: Adhäsionsmittelschicht
- 142, 143: Lichtstrahl

- 150: Winkel
- 151: Winkelbereich
- 152: Öffnungswinkel
- 153: Neigungswinkel
- 154: Antireflexionsschicht
- 155: untere Großseite
- 156: obere Großseite
- 157: LED
- 158: Einkoppelfläche
- 159: Fase
- 160 - 167: Lichtstrahl

- 201: Sensorelement
- 202: Durchlassbereich
- 203: Blendenöffnung

- 207: transmittierender Bereich
- 208: reflektierender Bereich

- 300: Abschlussschmalseite
- 301: Absorber
- 302, 303: Absorptionsschicht
- 304: transparente Ausgleichsschicht
- 305: Absorber

- 320: Zusatzlichtquelle
- 321: Lichtstrahlen
- 322: Luftschicht
- 323: Streulicht

- 325: Dokument

## Patentansprüche

1. Vorrichtung zur kontaktbasierten gleichzeitigen Aufnahme von Abdrücken mehrerer durchbluteter Hautbereiche menschlicher Autopodien mittels gestörter Totalreflexion, umfassend aus der Richtung eines kontaktierenden Hautbereichs gesehen,
- einen Schutzkörper (103) vorgegebener Dicke mit einer Auflagefläche (102), wobei die Auflagefläche (102) eine Größe aufweist, die die gleichzeitige Auflage mehrerer Autopodien ermöglicht,
- eine Sensorschicht (104), umfassend arrayförmig angeordnete, lichtempfindliche Sensorelemente (201) zur Detektion von Licht mindestens eines vorgegebenen Wellenlängenbereichs, wobei zwischen den Sensorelementen (201) Durchlassbereiche (202) angeordnet sind, welche für Licht mindestens eines vorgegebenen Beleuchtungswellenlängenbereichs transparent sind,
- einen Lichtleiter (106) aus einem für Licht des vorgegebenen Beleuchtungswellenlängenbereichs transparenten Material, welcher in Form einer planparallelen Platte ausgebildet ist, mit einer unteren Großseite (155) und einer dazu parallel angeordneten oberen Großseite (156), welche der Sensorschicht (104) zugewandt ist, sowie mehreren, die Großseiten (155, 156) verbindenden Schmalseiten, wobei eine der Schmalseiten als Einkoppelfläche (158) für Beleuchtungslicht ausgebildet ist, und
- eine entlang einer Längsrichtung der Einkoppelfläche (158) Beleuchtungslicht abstrahlende Lichtquelle (112), **dadurch gekennzeichnet, dass**
- die Lichtquelle (112) Licht in einem beschränkten Winkelbereich (151) um eine Vorzugsrichtung (113) abstrahlend ausgebildet ist, wobei die Vorzugsrichtung (113) mit den Großseiten (155, 156) einen Einfallswinkel einschließt, welcher so vorgegeben ist, dass Licht, welches in dem Winkelbereich (151) abgestrahlt wird, nach Eintritt in den Lichtleiter (106) an den Großseiten (155, 156) im Falle eines daran anliegenden Mediums mit einem Brechungsindex von Luft überwiegend totalreflektiert würde,
- zwischen der Sensorschicht (104) und dem Lichtleiter (106) eine Spiegelschicht (105) angeordnet ist, welche einen Teil des Beleuchtungslichts in den Lichtleiter (106) zurück reflektiert und einen anderen Teil des Beleuchtungslichts transmittiert, und dass
- die Vorrichtung Mittel zur Homogenisierung der Beleuchtungsstärke von Beleuchtungslicht, welches durch die obere Großseite (156) des Lichtleiters (106) aus diesem tritt und auf die Auflagefläche (102) trifft, umfasst, und/oder Mittel zur Homogenisierung einer zu detektierenden Lichtmenge in Abhängigkeit von der Beleuchtungsstärke des aus dem Schutzkörper (103) auf die Auflagefläche (102) treffenden Beleuchtungslichts umfasst, jeweils in Abhängigkeit von der Entfernung zur Lichtquelle (112),
- wobei sämtliche Schichten entsprechend ihrer Stapelreihenfolge jeweils durch eine direkte Verbindung oder durch eine adhäsive Schicht optisch gekoppelt sind.

2. Vorrichtung nach Anspruch 1, **dadurch gekennzeichnet, dass** die Mittel zur Homogenisierung der Beleuchtungsstärke an der Spiegelschicht (105) ausgebildet sind, welche mit der Sensorschicht (104) und dem Lichtleiter (106) optisch gekoppelt ist, wobei der Reflexionsgrad der Spiegelschicht (105) mit zunehmender Entfernung von der Lichtquelle (112) ab-und der Transmissionsgrad zunimmt.

3. Vorrichtung nach Anspruch 2, **dadurch gekennzeichnet, dass** die Spiegelschicht (105) reflektierende Bereiche (208) und transmittierende Bereiche (207) umfasst, wobei der Anteil der reflektierenden Bereiche (208) pro Flächeneinheit mit der Entfernung von der Lichtquelle (112) im Mittel abnimmt und der Anteil der transmittierenden Bereiche (207) pro Flächeneinheit mit der Entfernung von der Lichtquelle (112) im Mittel zunimmt.

4. Vorrichtung nach Anspruch 3, **dadurch gekennzeichnet, dass** die Dichte und/oder die Größe der reflektierenden Bereiche (208) mit zunehmender Entfernung von der Lichtquelle (112) abnimmt, während die Dichte und/oder Größe der transmittierenden Bereiche (207) zunimmt.

5. Vorrichtung nach Anspruch 2, **dadurch gekennzeichnet, dass** die Dicke der Spiegelschicht (105) mit der Entfernung von der Lichtquelle (112) abnimmt.

6. Vorrichtung nach Anspruch 1, **dadurch gekennzeichnet, dass** die Mittel zur Homogenisierung der Beleuchtungsstärke eine Absorptionsschicht (303) umfassen, welche zwischen der Spiegelschicht (105) und der Sensorschicht (104) oder zwischen den Sensorelementen (201) in den Durchlassbereichen (204) angeordnet ist, wobei mit zunehmender Entfernung von der Lichtquelle (112) der Absorptionsgrad der Absorptionsschicht für das Beleuchtungslicht abnimmt und der Transmissionsgrad zunimmt.

7. Vorrichtung nach einem der Ansprüche 1 bis 6, **dadurch gekennzeichnet, dass** die Mittel zur Homogenisierung der zu detektierenden Lichtmenge über den Sensorelementen (201) angeordnete Pixelaperturblenden (132) umfassen, deren Öffnungen (203) mit zunehmender Entfernung von der Lichtquelle (112) zunehmen.

8. Vorrichtung nach einem der Ansprüche 1 bis 7, **dadurch gekennzeichnet, dass** die Mittel zur Homogenisierung der zu detektierenden Lichtmenge eine Ansteuerung zur Variation der Empfindlichkeit der Sensorelemente (201) umfassen.

9. Vorrichtung nach einem der Ansprüche 1 bis 8, **dadurch gekennzeichnet, dass** die Normale der Einkoppelfläche (158) parallel zur Vorzugsrichtung (113) liegt.

10. Vorrichtung nach einem der Ansprüche 1 bis 9, **dadurch gekennzeichnet, dass** an einer als Abschlussschmalseite (300) ausgebildeten Schmalseite des Lichtleiters (106), welche der Einkoppelfläche (158) in Lichtausbreitungsrichtung gegenüberliegt, Mittel zur Unterdrückung der Ausbildung rücklaufender Strahlen ausgebildet sind.

11. Vorrichtung nach Anspruch 10, **dadurch gekennzeichnet, dass** die Abschlussschmalseite (300) mit einer Absorptionsschicht (302) versehen ist und/oder im Wesentlichen senkrecht zur Ausbreitungsrichtung von entlang der Vorzugsrichtung (113) in den Lichtleiter (106) eingetretenen Lichts angeordnet ist.

12. Vorrichtung nach einem der Ansprüche 1 bis 11, **dadurch gekennzeichnet, dass** der Schutzkörper (103) mit einer Dicke zwischen 50 µm und 1000 µm ausgebildet und mit der Sensorschicht optisch gekoppelt ist.

13. Vorrichtung nach einem der Ansprüche 1 bis 12, **dadurch gekennzeichnet, dass** zwischen der Auflagefläche (102) und der Sensorschicht (104) zur Unterdrückung der Detektion von Umgebungslicht eine Blendenschicht (124) angeordnet ist, wobei jeweils eine Pixelaperturblende (132) über einem Sensorelement (201) angeordnet ist, und / oder eine Spektralfilterschicht (131) zwischen der Sensorschicht (104) und dem Schutzkörper (103) angeordnet ist, und / oder der Schutzkörper (103) als Spektralfilterschicht (131) ausgebildet ist.

14. Vorrichtung nach einem der Ansprüche 1 bis 13, **dadurch gekennzeichnet, dass** unterhalb der unteren Großseite (155) des Lichtleiters (106) eine flächenförmig Licht abstrahlende Zusatzlichtquelle (320) angeordnet ist, welche von der unteren Großseite (155) des Lichtleiters (106) durch eine Luftschicht (322) beabstandet ist.

15. Vorrichtung nach Anspruch 14, **dadurch gekennzeichnet, dass** die Beleuchtungsstärke der Zusatzlichtquelle (320) an den Transmissionsgrad der Mittel zur Homogenisierung angepasst ist.

16. Vorrichtung nach Anspruch 14 oder 15, **dadurch gekennzeichnet, dass** die Zusatzlichtquelle (320) Licht aus mindestens zwei einander nicht überlappenden Wellenlängenbereichen abstrahlend ausgestaltet ist.

17. Vorrichtung nach Anspruch 16, **dadurch gekennzeichnet, dass** einer der mindestens zwei Wellenlängenbereiche dem für ein menschliches Auge sichtbaren Wellenlängenbereich benachbart ist.

18. Vorrichtung nach Anspruch 16 oder 17, **dadurch gekennzeichnet, dass** die Zusatzlichtquelle (322) Licht aus einem roten, einem blauen und einem grünen Wellenlängenbereich abstrahlend ausgestaltet ist, und Licht dieser Wellenlängenbereiche mittels einer Steuerung einzeln an- und abschaltbar ist.

## Claims

1. A device for simultaneous contact-based taking of impressions of multiple perfused skin regions of human autopods by means of disturbed total internal reflection, comprising, as seen from the direction of a contacting skin region,
- a protective body (103) of predetermined thickness having a placement surface (102), the placement surface (102) being of a size to allow multiple autopods to be placed thereon simultaneously,
- a sensor layer (104) comprising light-sensitive sensor elements (201) arranged in an array for detecting light of at least one predetermined wavelength range, wherein transmission regions (202) are arranged between the sensor elements (201) which are transparent for light of at least one predetermined illumination wavelength range,
- a light guide (106) made of a material transparent to light of the predetermined illumination wavelength range, which is designed in the form of a plane-parallel plate, having a lower large side (155) and an upper large side (156) arranged parallel thereto, which faces the sensor layer (104), as well as a plurality of narrow sides connecting the large sides (155, 156), one of the narrow sides being designed as a coupling-in surface (158) for illumination light, and
- a light source (112) radiating illumination light along a longitudinal direction of the coupling surface (158), **characterised in that**
- the light source (112) is designed to emit light in a limited angular range (151) about a preferred direction (113), the preferred direction (113) including with the large sides (155, 156) an angle of incidence which is predetermined such that light emitted in the angular range (151), after entering the light guide (106), would be predominantly totally reflected at the large sides (155, 156) in the case of a medium having a refraction index of air adjacent thereto,
- a mirror layer (105) is arranged between the sensor layer (104) and the light guide (106), which reflects a part of the illumination light back into the light guide (106) and transmits another part of the illumination light, and **in that**
- the device comprises means for homogenising the illumination intensity of illumination light which emerges from the light guide (106) through the upper large side (156) thereof and impinges on the support surface (102), and/or means for homogenising a quantity of light to be detected as a function of the illumination intensity of the illumination light impinging on the support surface (102) from the protective body (103), in each case as a function of the distance from the light source (112),
- wherein all layers are optically coupled by a direct connection or by an adhesive layer according to their stacking order.

2. The device according to claim 1, **characterised in that** the means for homogenising the illuminance are formed on the mirror layer (105), which is optically coupled to the sensor layer (104) and the light guide (106), the reflectance of the mirror layer (105) decreasing and the transmittance increasing with increasing distance from the light source (112).

3. The device according to claim 2, **characterised in that** the mirror layer (105) comprises reflecting regions (208) and transmitting regions (207), the proportion of reflecting regions (208) per unit area decreasing on average with distance from the light source (112) and the proportion of transmitting regions (207) per unit area increasing on average with distance from the light source (112).

4. The device according to claim 3, **characterised in that** the density and/or size of the reflecting regions (208) decreases with increasing distance from the light source (112), while the density and/or size of the transmitting regions (207) increases.

5. The device of claim 2, **characterised in that** the thickness of the mirror layer (105) decreases with distance from the light source (112).

6. The device according to claim 1, **characterised in that** the means for homogenising the illuminance comprise an absorption layer (303) which is arranged between the mirror layer (105) and the sensor layer (104) or between the sensor elements (201) in the transmitting regions (204), the degree of absorption of the absorption layer for the illuminating light decreasing and the transmittance increasing with increasing distance from the light source (112).

7. The device according to any one of claims 1 to 6, **characterised in that** the means for homogenising the quantity of light to be detected comprise pixel aperture stops (132) arranged above the sensor elements (201), the openings (203) of which stops increase with increasing distance from the light source (112).

8. The device according to any one of claims 1 to 7, **characterised in that** the means for homogenising the quantity of light to be detected comprise a control for varying the sensitivity of the sensor elements (201).

9. The device according to any one of claims 1 to 8, **characterised in that** the normal of the coupling surface (158) is parallel to the preferred direction (113).

10. The device according to any one of claims 1 to 9, **characterised in that** means for suppressing the formation of returning beams are formed on a narrow side of the light guide (106) which is designed as a terminating narrow side (300) and which is opposite the coupling surface (158) in the light propagation direction.

11. The device according to claim 10, **characterised in that** the terminating narrow side (300) is provided with an absorption layer (302) and/or is arranged substantially perpendicular to the propagation direction of light entering the light guide (106) along the preferred direction (113).

12. The device according to any one of claims 1 to 11, **characterised in that** the protective body (103) is formed with a thickness between 50 pm and 1000 pm and is optically coupled to the sensor layer.

13. The device according to any one of claims 1 to 12, **characterised in that** a stop layer (124) is arranged between the support surface (102) and the sensor layer (104) for suppressing the detection of ambient light, wherein in each case a pixel aperture stop (132) is arranged over a sensor element (201), and/or a spectral filter layer (131) is arranged between the sensor layer (104) and the protective body (103), and/or the protective body (103) is designed as a spectral filter layer (131).

14. The device according to any one of claims 1 to 13, **characterised in that** below the lower large side (155) of the light guide (106) there is arranged an additional light source (320) which emits light in the form of an area and is spaced apart from the lower large side (155) of the light guide (106) by a layer of air (322).

15. The device according to claim 14, **characterised in that** the illuminance of the auxiliary light source (320) is adapted to the transmittance of the means for homogenisation.

16. The device according to claim 14 or 15, **characterised in that** the additional light source (320) is designed to emit light from at least two non-overlapping wavelength ranges.

17. The device according to claim 16, **characterised in that** one of the at least two wavelength ranges is adjacent to the wavelength range visible to a human eye.

18. The device according to claim 16 or 17, **characterised in that** the additional light source (322) is designed to emit light from a red, a blue and a green wavelength range, and light from these wavelength ranges can be switched on and off individually by means of a control.

## Revendications

1. Dispositif de saisie par contact simultanée des impressions de plusieurs régions cutanées irriguées d'autopodes humains au moyen d'une réflexion totale perturbée, comprenant, vu depuis la direction d'une région cutanée en contact,
- un corps de protection (103) d'une épaisseur prédéterminée avec une surface d'appui (102), la surface d'appui (102) présentant une taille qui permet l'appui simultané de plusieurs autopodes,
- une couche de détection (104), comprenant des éléments de détection (201) sensibles à la lumière, disposés en forme de réseau, pour la détection de lumière d'au moins une plage de longueurs d'onde prédéfinie, des zones de transmission (202) étant disposées entre les éléments de détection (201), lesquelles sont transparentes pour la lumière d'au moins une plage de longueurs d'onde d'éclairage prédéfinie,
- un guide de lumière (106) en un matériau transparent pour la lumière de la plage de longueurs d'onde d'éclairage prédéfinie, qui est réalisé sous la forme d'une plaque à faces planes et parallèles, avec un grand côté inférieur (155) et un grand côté supérieur (156) disposé parallèlement à celui-ci, qui est tourné vers la couche de détection (104), ainsi que plusieurs petits côtés reliant les grands côtés (155, 156), l'un des petits côtés étant réalisé comme surface de couplage (158) pour la lumière d'éclairage, et
- une source de lumière (112) émettant une lumière d'éclairage le long d'une direction longitudinale de la surface de couplage (158), **caractérisé en ce que**
- la source de lumière (112) est réalisée de manière à émettre de la lumière dans une plage angulaire limitée (151) autour d'une direction préférentielle (113), la direction préférentielle (113) incluant avec les grands côtés (155, 156) un angle d'incidence qui est prédéterminé de telle sorte que la lumière qui est émise dans la plage angulaire (151) serait, après entrée dans le guide de lumière (106), réfléchie de manière prépondérante totalement sur les grands côtés (155, 156) dans le cas d'un milieu s'y appliquant avec un indice de réfraction de l'air,
- entre la couche de détection (104) et le guide de lumière (106) est disposée une couche de miroir (105) qui réfléchit une partie de la lumière d'éclairage en retour dans le guide de lumière (106) et transmet une autre partie de la lumière d'éclairage, et **en ce que**
- le dispositif comprend des moyens pour homogénéiser l'intensité d'éclairage de la lumière d'éclairage qui sort du guide de lumière (106) par le grand côté supérieur (156) de celui-ci et arrive sur la surface d'appui (102), et/ou des moyens pour homogénéiser une quantité de lumière à détecter en fonction de l'intensité d'éclairage de la lumière d'éclairage qui arrive sur la surface d'appui (102) à partir du corps de protection (103), respectivement en fonction de la distance à la source de lumière (112),
- toutes les couches étant couplées optiquement selon leur ordre d'empilement, respectivement par une liaison directe ou par une couche adhésive.

2. Dispositif selon la revendication 1, **caractérisé en ce que** les moyens d'homogénéisation de l'intensité d'éclairage sont formés sur la couche de miroir (105) qui est couplée optiquement à la couche de détection (104) et au guide de lumière (106), le degré de réflexion de la couche de miroir (105) diminuant et le degré de transmission augmentant avec l'éloignement de la source de lumière (112).

3. Dispositif selon la revendication 2, **caractérisé en ce que** la couche de miroir (105) comprend des zones réfléchissantes (208) et des zones transmissives (207), la proportion des zones réfléchissantes (208) par unité de surface diminuant en moyenne avec la distance à la source de lumière (112) et la proportion des zones transmissives (207) par unité de surface augmentant en moyenne avec la distance à la source de lumière (112).

4. Dispositif selon la revendication 3, **caractérisé en ce que** la densité et/ou la taille des zones réfléchissantes (208) diminue avec l'éloignement de la source de lumière (112), tandis que la densité et/ou la taille des zones de transmission (207) augmente.

5. Dispositif selon la revendication 2, **caractérisé en ce que** l'épaisseur de la couche de miroir (105) diminue avec l'éloignement de la source de lumière (112).

6. Dispositif selon la revendication 1, **caractérisé en ce que** les moyens d'homogénéisation de l'intensité d'éclairage comprennent une couche absorbante (303) qui est disposée entre la couche réfléchissante (105) et la couche de détection (104) ou entre les éléments de détection (201) dans les zones de transmission (204), le degré d'absorption de la couche absorbante pour la lumière d'intensité d'éclairage diminuant et le degré de transmission augmentant avec l'éloignement de la source de lumière (112).

7. Dispositif selon l'une quelconque des revendications 1 à 6, **caractérisé en ce que** les moyens d'homogénéisation de la quantité de lumière à détecter comprennent des diaphragmes d'ouverture de pixels (132) disposés au-dessus des éléments de détection (201) et dont les ouvertures (203) augmentent avec l'éloignement de la source de lumière (112).

8. Dispositif selon l'une quelconque des revendications 1 à 7, **caractérisé en ce que** les moyens d'homogénéisation de la quantité de lumière à détecter comprennent une commande pour faire varier la sensibilité des éléments de détection (201).

9. Dispositif selon l'une quelconque des revendications 1 à 8, **caractérisé en ce que** la normale de la surface de couplage (158) est parallèle à la direction préférentielle (113).

10. Dispositif selon l'une quelconque des revendications 1 à 9, **caractérisé en ce que** des moyens de suppression de la formation de rayons de retour sont formés sur un petit côté du guide de lumière (106) réalisé sous forme de petit côté de terminaison (300), qui est opposé à la surface de couplage (158) dans la direction de propagation de la lumière.

11. Dispositif selon la revendication 10, **caractérisé en ce que** le petit côté de terminaison (300) est pourvu d'une couche d'absorption (302) et/ou est disposé sensiblement perpendiculairement à la direction de propagation de la lumière entrée dans le guide de lumière (106) le long de la direction préférentielle (113).

12. Dispositif selon l'une quelconque des revendications 1 à 11, **caractérisé en ce que** le corps de protection (103) est réalisé avec une épaisseur comprise entre 50 µm et 1000 µm et est couplé optiquement à la couche de détection.

13. Dispositif selon l'une quelconque des revendications 1 à 12, **caractérisé en ce qu'**une couche de diaphragme (124) est disposée entre la surface d'appui (102) et la couche de détection (104) pour supprimer la détection de la lumière ambiante, un diaphragme d'ouverture de pixels (132) étant respectivement disposé au-dessus d'un élément de détection (201), et/ou une couche de filtre spectral (131) étant disposée entre la couche de détection (104) et le corps de protection (103), et/ou le corps de protection (103) étant conçu comme une couche de filtre spectral (131).

14. Dispositif selon l'une quelconque des revendications 1 à 13, **caractérisé en ce qu'**une source de lumière supplémentaire (320) émettant de la lumière sous forme de surface est disposée en dessous du grand côté inférieur (155) du guide de lumière (106), laquelle est espacée du grand côté inférieur (155) du guide de lumière (106) par une couche d'air (322).

15. Dispositif selon la revendication 14, **caractérisé en ce que** l'intensité d'éclairage de la source de lumière supplémentaire (320) est adapté au degré de transmission des moyens d'homogénéisation.

16. Dispositif selon la revendication 14 ou 15, **caractérisé en ce que** la source de lumière supplémentaire (320) est conçue pour émettre de la lumière à partir d'au moins deux plages de longueurs d'onde qui ne se chevauchent pas.

17. Dispositif selon la revendication 16, **caractérisé en ce que** l'une desdites au moins deux plages de longueurs d'onde est adjacente à la plage de longueurs d'onde visible par l'oeil humain.

18. Dispositif selon la revendication 16 ou 17, **caractérisé en ce que** la source de lumière supplémentaire (322) est conçue pour émettre de la lumière à partir d'une plage de longueurs d'onde rouge, bleue et verte, et la lumière de ces plages de longueurs d'onde peut être activée et désactivée individuellement au moyen d'une commande.
